# EUROPEAN PATENT APPLICATION

(11) **EP 4 827 213 A1**
(43) Date of publication of application: **21.10.2026**
(21) Application number: 24923540.9
(22) Date of filing: 17.12.2024
(51) Int. Cl.: H04W 72/231

(54) **RESOURCE CONFIGURATION METHOD AND COMMUNICATION APPARATUS**

(30) Priority: 08.02.2024 CN 202410178122
(71) Applicant: Honor Device Co., Ltd., Shenzhen, Guangdong 518040 (CN)
(72) Inventor: WANG, Chao, Shenzhen, Guangdong 518040 (CN); ZHENG, Guozeng, Shenzhen, Guangdong 518040 (CN); CAO, Yongzhao, Shenzhen, Guangdong 518040 (CN); CHI, Liangang, Shenzhen, Guangdong 518040 (CN)
(74) Representative: Goddar, Heinz J.
(86) International application number: PCT/CN2024/139966
(87) International publication number: WO 2025/167338

(57) **Abstract**

This application provides a resource configuration method and a communication apparatus. When a number of antenna ports required by port capability of a terminal conflicts with an existing protocol, a network device configures, for each resource, a number of first antenna ports greater than the number of antenna ports of the terminal, and then indicates a deactivated antenna port through first indication information or second indication information, so that a number of finally activated antenna ports is the same as the number of antenna ports of the terminal. The solution achieves an objective of forming an equivalent new number of antenna ports through cooperation between the number of first antenna ports and the deactivated antenna port, thereby meeting a requirement of uplink 3-port transmission.

## Description

This application claims priority to Chinese Patent Application No. 202410178122.3, filed with the China National Intellectual Property Administration on February 8, 2024 and entitled "RESOURCE CONFIGURATION METHOD AND COMMUNICATION APPARATUS", which is incorporated herein by reference in its entirety.

### TECHNICAL FIELD

This application relates to the communication field, and more specifically, to a resource configuration method and a communication apparatus.

### BACKGROUND

Currently, before a network device communicates with a terminal, the network device needs to configure resources for the terminal, so that the terminal can send or receive control information and data on corresponding resources.

A process in which the network device configures resources for the terminal generally includes: a network configures a plurality of resource sets for the terminal, each resource set includes a plurality of resources, and resources in one resource set are configured with a same number of antenna ports. In addition, the number of antenna ports configured for each resource is obtained from a value range of the number of antenna ports corresponding to the resource. For example, if the value range of the number of antenna ports is (1, 2, 4), the number of antenna ports configured for each resource can only be a value within the value range.

Currently, for a terminal that supports a 3-transmit antenna architecture, when the network device configures resources for the terminal, researchers have found that a number of antenna ports required by port capability of the terminal conflicts with an existing protocol. The main reason is that the number of antenna ports required to be configured for the terminal does not exist within a value range of a number of antenna ports corresponding to resources specified in the existing protocol. Consequently, the network device and the terminal cannot support uplink 3-antenna port configuration based on a conventional configuration solution.

### SUMMARY

This application provides a resource configuration method and a communication apparatus, which achieve an objective of forming an equivalent new number of antenna ports through cooperation between a number of first antenna ports and a deactivated antenna port.

To achieve the foregoing objective, the following technical solutions are used in this application:

According to a first aspect, a resource configuration method is provided. The method may be performed by a network device, or by a chip configured in the network device.

Specifically, the method includes: sending first resource configuration information, where the first resource configuration information indicates at least one resource and a number of first antenna ports corresponding to the resource, the number of first antenna ports is greater than a number of antenna ports of a terminal, the number of first antenna ports indicates a corresponding quantity of antenna port identifiers, and the number of first antenna ports is determined based on port capability of the terminal; and sending first indication information or receiving second indication information reported by the terminal, where each of the first indication information and the second indication information carries a first antenna port identifier and/or a second antenna port identifier, the first antenna port identifier is an identifier of a deactivated antenna port, and the second antenna port identifier is an identifier of an activated antenna port, a quantity of first antenna port identifiers is a difference between the number of first antenna ports and the number of antenna ports of the terminal, and a quantity of second antenna port identifiers is the same as the number of antenna ports of the terminal.

It should be noted that the port capability of the terminal may be reported to the network device by the network device enabling an antenna port of the terminal, or may be actively reported by the terminal to the network device, or may be reported by the terminal to the network device in response to a request from the network device.

When a number of antenna ports required by the port capability of the terminal conflicts with an existing protocol, the network device configures, for each resource, a number of first antenna ports greater than the number of antenna ports of the terminal, and then indicates a deactivated antenna port through first indication information or second indication information, so that a number of finally activated antenna ports is the same as the number of antenna ports of the terminal. This solution achieves an objective of forming an equivalent new number of antenna ports through cooperation between the number of first antenna ports and the deactivated antenna port, thereby meeting a requirement of uplink transmission of the terminal.

That the number of antenna ports required by the port capability of the terminal conflicts with the existing protocol may be understood as: the number of antenna ports required to be configured for the terminal does not exist within a value range of the number of antenna ports corresponding to resources determined based on the existing protocol.

For a terminal that supports a 3-transmit antenna architecture, the network device may configure resources for the terminal corresponding to the number of first antenna ports of 4, and then use the first indication information or the second indication information to indicate one deactivated antenna port and remaining 3 activated antenna ports. This is equivalent to configuring 3 antenna ports for the terminal, thereby enabling the network device and the terminal to support uplink 3-antenna port configuration.

In a possible implementation, after receiving the second indication information reported by the terminal, the method further includes: sending third indication information to the terminal, where the third indication information indicates that the network device has obtained the first antenna port identifier and/or the second antenna port identifier carried in the second indication information.

After receiving the second indication information, the network device sends the third indication information to the terminal to confirm that the network device knows which antenna ports are deactivated. In this way, information sharing and mutual confirmation between the terminal and the network device are completed. When the terminal receives the third indication information, the network device and the terminal can perform resource configuration based on a same deactivated antenna port.

In a possible implementation, the first indication information is carried in downlink control signaling.

In embodiments of this application, the downlink control signaling is, for example, radio resource control (Radio Resource Control, RRC) signaling, media access control control element (Media Access Control Control Element, MAC CE) signaling, downlink control information (Downlink Control Information, DCI) signaling, or the like.

In a possible implementation, the second indication information is carried in uplink control signaling.

In embodiments of this application, the uplink control signaling is, for example, radio resource control (Radio Resource Control, RRC) signaling, media access control control element (Media Access Control Control Element, MAC CE) signaling, uplink control information (Uplink Control Information, UCI) signaling, or the like.

In a possible implementation, the number of antenna ports of the terminal is 3, and the number of first antenna ports is 4.

One deactivated antenna port is indicated through the first indication information or the second indication information, to achieve an objective of forming an equivalent number of 3 antenna ports, to meet a requirement of uplink 3-port transmission.

In a possible implementation, the at least one resource is a sounding reference signal SRS resource.

In a possible implementation, the method further includes: calculating, based on first N antenna port identifiers in a corresponding quantity of antenna port identifiers indicated by the number of first antenna ports and arranged in order of size, cyclic shifts respectively corresponding to the first N antenna port identifiers, where the cyclic shifts are used to generate a signal sequence to be sent, and N is the number of antenna ports of the terminal.

In this application, regardless of which antenna port identifiers are deactivated, when calculating the cyclic shifts of the antenna ports, identifiers of activated antenna ports are mapped to the first N antenna port identifiers, and then the cyclic shifts respectively corresponding to the first N antenna port identifiers are calculated.

In a possible implementation, a frequency domain start position of each antenna port of each resource is calculated based on an identifier of an activated antenna port of each resource and the number of antenna ports of the terminal.

In a conventional solution, frequency domain start positions respectively corresponding to a plurality of antenna ports of each resource need to be calculated, whereas in embodiments of this application, the frequency domain start positions of deactivated antenna ports are not calculated.

According to a second aspect, a resource configuration method is provided. The method may be performed by a terminal, or by a chip configured in the terminal.

Specifically, the method includes: receiving first resource configuration information, where the first resource configuration information indicates at least one resource and a number of first antenna ports corresponding to the resource, the number of first antenna ports is greater than the number of antenna ports of the terminal, the number of first antenna ports indicates a corresponding quantity of antenna port identifiers, and the number of first antenna ports is determined based on port capability of the terminal; receiving first indication information or reporting second indication information to a network device, where each of the first indication information and the second indication information carries a first antenna port identifier and/or a second antenna port identifier, the first antenna port identifier is an identifier of a deactivated antenna port, the second antenna port identifier is an identifier of an activated antenna port, the number of first antenna port identifiers is a difference between the number of first antenna ports and the number of antenna ports of the terminal, and the number of second antenna port identifiers is the same as the number of antenna ports of the terminal; and performing resource configuration based on the first resource configuration information and the first indication information or the second indication information.

In embodiments of this application, the port capability of the terminal may be reported to the network device by the network device enabling an antenna port of the terminal, or may be actively reported by the terminal to the network device, or may be reported by the terminal to the network device in response to a request from the network device.

When configuring resources, the terminal receives first resource configuration information, and obtains a number of first antenna ports configured for each resource, where the number of first antenna ports is greater than the number of antenna ports of the terminal, and other information. Then, the terminal determines an identifier of an activated antenna port through an identifier of a deactivated antenna port indicated by the first indication information or the second indication information, and performs frequency domain start position calculation and cyclic shift calculation on the activated antenna port. The objective of forming an equivalent new number of antenna ports is achieved through cooperation between the number of first antenna ports and the deactivated antenna ports, thereby meeting a requirement of uplink transmission of the terminal.

For a terminal that supports a 3-transmit antenna architecture, the terminal receives a number of first antenna ports of 4 corresponding to resources configured by a network device, and then determines the remaining 3 activated antenna ports based on one deactivated antenna port indicated by the first indication information or the second indication information. This is equivalent to configuring 3 antenna ports for the terminal, thereby enabling the network device and the terminal to support uplink 3-antenna port configuration.

In a possible implementation, after reporting the second indication information to the network device, the method further includes: receiving third indication information sent by the network device, where the third indication information indicates that the network device has obtained the first antenna port identifier and/or the second antenna port identifier carried in the second indication information.

After receiving the third indication information, the terminal can determine that the network device knows which antenna ports are deactivated, thereby completing information sharing and mutual confirmation between the terminal and the network device. This sets the stage for subsequent resource configuration by the network device and the terminal based on the same deactivated antenna port.

In a possible implementation, the first indication information is carried in downlink control signaling.

In embodiments of this application, the downlink control signaling is, for example, radio resource control (Radio Resource Control, RRC) signaling, media access control control element (Media Access Control Control Element, MAC CE) signaling, downlink control information (Downlink Control Information, DCI) signaling, or the like.

In a possible implementation, the second indication information is carried in uplink control signaling.

In embodiments of this application, the uplink control signaling is, for example, radio resource control (Radio Resource Control, RRC) signaling, media access control control element (Media Access Control Control Element, MAC CE) signaling, uplink control information (Uplink Control Information, UCI) signaling, or the like.

In a possible implementation, the number of antenna ports of the terminal is 3, and the number of first antenna ports is 4.

One deactivated antenna port is indicated through the first indication information or the second indication information, to achieve an objective of forming an equivalent number of 3 antenna ports, to meet a requirement of uplink 3-port transmission of the terminal.

In a possible implementation, the at least one resource is a sounding reference signal SRS resource.

In a possible implementation, the method further includes: calculating, based on first N antenna port identifiers in a corresponding quantity of antenna port identifiers indicated by the number of first antenna ports and arranged in order of size, cyclic shifts respectively corresponding to the first N antenna port identifiers, where the cyclic shifts are used to generate a signal sequence to be sent, and N is the number of antenna ports of the terminal.

In this application, regardless of which antenna port identifiers are deactivated, when calculating the cyclic shifts of the antenna ports, identifiers of activated antenna ports are mapped to the first N antenna port identifiers, and then the cyclic shifts respectively corresponding to the first N antenna port identifiers are calculated.

In a possible implementation, the method further includes: calculating a frequency domain start position of each antenna port of each resource based on an identifier of an activated antenna port of each resource and the number of antenna ports of the terminal.

In this application, regardless of which antenna port identifiers are deactivated, when calculating the cyclic shifts of the antenna ports, identifiers of activated antenna ports are mapped to the first N antenna port identifiers, and then the cyclic shifts respectively corresponding to the first N antenna port identifiers are calculated.

In a possible implementation, the method further includes: in PUSCH transmission, linearly scaling PUSCH non-zero power based on a number of activated antenna ports indicated by the second antenna port identifier.

In a conventional solution, PUSCH non-zero power is generally linearly scaled based on the number of antenna ports configured for resources. In this solution, the number of first antenna ports is greater than the number of antenna ports of the terminal, and the PUSCH non-zero power is not linearly scaled based on the number of first antenna ports. Instead, the PUSCH non-zero power is linearly scaled based on the second antenna port identifier, that is, a quantity of identifiers of the activated antenna ports.

According to a third aspect, a resource configuration method is provided. The method may be performed by a network device, or by a chip configured in the network device.

Specifically, the method includes: generating second resource configuration information, where the second resource configuration information indicates a plurality of first resource sets and numbers of second antenna ports corresponding to resources in each first resource set, a sum of the numbers of second antenna ports corresponding to the resources in the first resource set is the same as a number of antenna ports of the terminal, and spatial domain information and power control parameters of the resources in the first resource set are the same; and sending the second resource configuration information to the terminal.

This solution supports transmission by combining numbers of ports corresponding to different resources, and configures same spatial domain information and power control parameters for different resources to ensure that sending signals through different resources achieves a same result as sending signals through a same resource.

In a possible implementation, the second resource configuration information includes a first resource set identifier corresponding to each resource in the first resource set.

This solution indicates that the second resource configuration information indicates the first resource set identifier corresponding to each resource. The second resource configuration information may indicate a correspondence between the first resource set and each resource in the first resource set through a ResourceGroup configuration or a Resource configuration.

In a possible implementation, the second resource configuration information further includes a second resource set identifier corresponding to each resource in the first resource set, where the second resource set identifier is an identifier of a second resource set to which the first resource set belongs.

The essence of this solution is that the second resource configuration information includes the first resource set identifier and the second resource set identifier corresponding to each resource in the first resource set. The correspondence between the first resource set and each resource in the first resource set may be indicated through the ResourceSet configuration or the Resource configuration.

In one case, a plurality of first resource sets belong to one second resource set. In another case, a plurality of second resource sets are configured, and each second resource set includes a plurality of first resource sets. In still another case, resources in at least two second resource sets may form one first resource set. The following describes these three cases separately.

In a possible implementation, in the plurality of first resource sets, second resource set identifiers corresponding to resources in some of the first resource sets are the same, and second resource set identifiers corresponding to resources in some of the first resource sets are different.

The essence of this solution is that a plurality of second resource sets are configured, and each second resource set includes a plurality of first resource sets.

In a possible implementation, second resource set identifiers corresponding to resources in a same first resource set are not completely the same.

The essence of this solution is that resources in at least two second resource sets may form one first resource set.

In a possible implementation, the numbers of second antenna ports corresponding to resources belonging to a same second resource set are the same.

This solution is a limitation on a case in which a plurality of resources in a first resource set come from different ResourceSets. In this case, for each second resource set, specifications of an existing protocol are still followed for constraint, and the numbers of antenna ports of a plurality of resources in a same ResourceSet are the same. This solution involves minor modifications to the specifications of the existing protocol and does not increase signaling overheads.

In a possible implementation, the numbers of second antenna ports corresponding to resources in different second resource sets are not completely the same.

In this solution, the numbers of antenna ports corresponding to resources in different second resource sets do not affect each other, and may be the same, or different, or partially the same. By flexibly setting the number of second antenna ports corresponding to each resource, the types that are of the number of antenna ports of terminals and that are supported by the resource configuration method can be expanded.

In a possible implementation, the spatial domain information and power control parameters of resources in a plurality of first resource sets belonging to the same second resource set are partially the same or different.

In this solution, in one case, different spatial domain information and power control parameters are configured for a plurality of ResourceGroups in one ResourceSet, where a plurality of Resources in each ResourceGroup are configured with the same spatial domain information and power control parameters.

In another case, different spatial domain information and power control parameters are configured for a plurality of resources (Resource) in one ResourceSet, to meet the requirements of the ResourceGroups corresponding to these resources for spatial domain information and power control parameters. In this case, there is a correspondence in configuration between the ResourceSet and another ResourceSet or other ResourceSets.

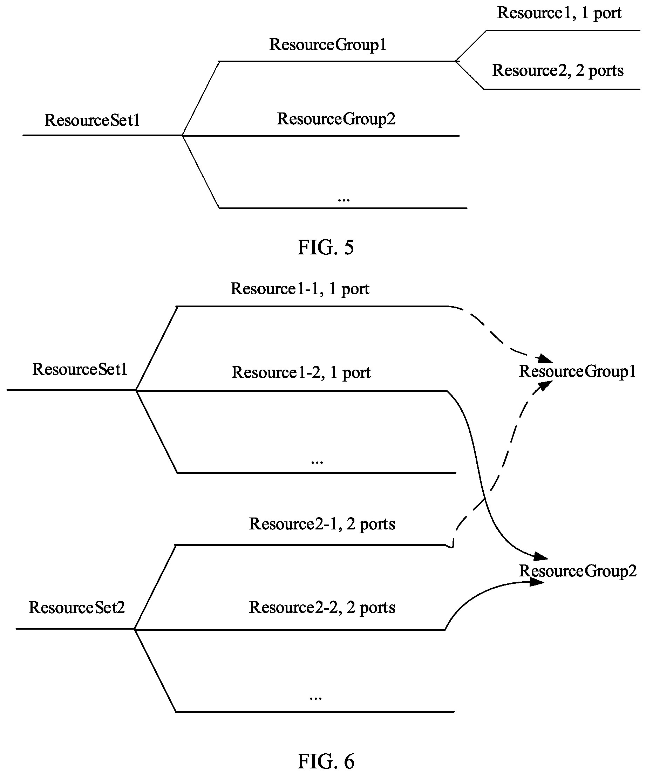

For example, refer to FIG. 6. ResourceSet1 configures different spatial domain information and power control parameters for Resource1-1 and Resource1-2. Correspondingly, ResourceSet2 configures different spatial domain information and power control parameters for Resource2-1 and Resource2-2. In addition, it is also necessary to ensure that the spatial domain information and power control parameters of Resource1-1 and Resource2-1 belonging to same ResourceGroup1 are the same, and to ensure that the spatial domain information and power control parameters of Resource1-2 and Resource2-2 belonging to same ResourceGroup2 are the same.

In a possible implementation, the numbers of second antenna ports corresponding to resources in each first resource set are all the same, or partially the same, or all different.

In embodiments of this application, there is no limitation on the numbers of antenna ports corresponding to resources in each first resource set. The numbers of antenna ports may be set according to the specifications of the existing protocol, or may be independently defined, or may be freely combined.

In a possible implementation, the spatial domain information includes a serving cell identifier and an identifier of a reference signal, and the reference signal includes a synchronization signal block index (Synchronization Signal Block Index, SSB- Index), a channel state information reference signal index (Channel State Information Reference Signal Index, CSI-RS-Index), an SRS resource identifier (SRS ResourceID), and an uplink bandwidth part (Uplink BWP).

In a possible implementation, the power control parameters include a path loss compensation configuration parameter (alpha), a target reception power (p0), a path loss reference signal (pathlossReferenceRS), and an SRS power control adjustment state (SRS-powercontroladjustmentstates).

In a possible implementation, the method further includes: in a downlink scheduling process, sending downlink control information to the terminal, where the downlink control information carries a resource indication field (SRS Resource Indicator, SRI) or a resource set indication field (SRS Resource Set Indicator, SRSI), a bit width of the resource indication field (SRI) or a bit width of the resource set indication field (SRSI) corresponds to a number of first resource sets, and a target first resource set indicated by the resource indication field (SRI) or the resource set indication field (SRSI) is used to configure PUSCH transmission.

In a conventional solution, downlink scheduling is performed on a resource-by-resource basis, whereas in this solution, downlink scheduling is performed by combining numbers of antenna ports of resources in a ResourceGroup as a whole. Therefore, the indication field for indicating the ResourceGroup is different from that in the conventional solution. This solution performs downlink scheduling through a resource indication field (SRI) or a resource set indication field (SRSI), and a number of bits of the resource indication field (SRI) or a number of bits of the resource set indication field (SRSI) is determined based on a number of ResourceGroups.

Further, in the conventional solution, PUSCH transmission is configured by resources indicated by downlink scheduling, whereas in this solution, PUSCH transmission is configured by port combinations of the resources in the first resource set indicated by downlink scheduling.

According to a fourth aspect, a resource configuration method is provided. The method may be performed by a terminal, or by a chip configured in the terminal.

Specifically, the method includes: receiving second resource configuration information, where the second resource configuration information indicates a plurality of first resource sets and numbers of second antenna ports corresponding to resources in each first resource set, a sum of the numbers of second antenna ports corresponding to the resources in the first resource set is the same as a number of antenna ports of the terminal, and spatial domain information and power control parameters of the resources in the first resource set are the same; and performing resource configuration based on the second resource configuration information.

This solution supports transmission by combining numbers of ports corresponding to different resources, and configures same spatial domain information and power control parameters for different resources to ensure that sending signals through different resources achieves a same result as sending signals through a same resource.

In a possible implementation, the second resource configuration information includes a first resource set identifier corresponding to each resource in the first resource set.

This solution indicates that the second resource configuration information indicates the first resource set identifier corresponding to each resource. The second resource configuration information may indicate a correspondence between the first resource set and each resource in the first resource set through a ResourceGroup configuration or a Resource configuration.

In a possible implementation, the second resource configuration information further includes a second resource set identifier corresponding to each resource in the first resource set, where the second resource set identifier is an identifier of a second resource set to which the first resource set belongs.

The essence of this solution is that the second resource configuration information includes the first resource set identifier and the second resource set identifier corresponding to each resource in the first resource set. The correspondence between the first resource set and each resource in the first resource set may be indicated through the ResourceSet configuration or the Resource configuration.

In a possible implementation, in the plurality of first resource sets, second resource set identifiers corresponding to resources in some of the first resource sets are the same, and second resource set identifiers corresponding to resources in some of the first resource sets are different.

The essence of this solution is that a plurality of second resource sets are configured, and each second resource set includes a plurality of first resource sets.

In a possible implementation, second resource set identifiers corresponding to resources in a same first resource set are not completely the same.

The essence of this solution is that resources in at least two second resource sets may form one first resource set.

In a possible implementation, the numbers of second antenna ports corresponding to resources belonging to a same second resource set are the same.

This solution is a limitation on a case in which a plurality of resources in a first resource set come from different ResourceSets. In this case, for each second resource set, specifications of an existing protocol are still followed for constraint, and the numbers of antenna ports of a plurality of resources in a same ResourceSet are the same. This solution involves minor modifications to the specifications of the existing protocol and does not increase signaling overheads.

In a possible implementation, the numbers of second antenna ports corresponding to resources in different second resource sets are not completely the same.

In this solution, the numbers of antenna ports corresponding to resources in different second resource sets do not affect each other, and may be the same, or different, or partially the same. By flexibly setting the number of second antenna ports corresponding to each resource, the types that are of the number of antenna ports of terminals and that are supported by the resource configuration method can be expanded.

In a possible implementation, the spatial domain information and power control parameters of resources in a plurality of first resource sets belonging to the same second resource set are partially the same or different.

In this solution, in one case, different spatial domain information and power control parameters are configured for a plurality of ResourceGroups in one ResourceSet.

In a possible implementation, the numbers of second antenna ports corresponding to resources in each first resource set are all the same, or partially the same, or all different.

In embodiments of this application, there is no limitation on the numbers of antenna ports corresponding to resources in each first resource set. The numbers of antenna ports may be set according to the specifications of the existing protocol, or may be independently defined, or may be freely combined.

In a possible implementation, the spatial domain information includes a serving cell identifier and an identifier of a reference signal, and the reference signal includes a synchronization signal block index (Synchronization Signal Block Index, SSB- Index), a channel state information reference signal index (Channel State Information Reference Signal Index, CSI-RS-Index), an SRS resource identifier (SRS ResourceID), and an uplink bandwidth part (UplinkBWP).

In a possible implementation, the power control parameters include a path loss compensation configuration parameter (alpha), a target reception power (p0), a path loss reference signal (pathlossReferenceRS), and an SRS power control adjustment state (SRS-powercontroladjustmentstates).

In a possible implementation, the method further includes: in a downlink scheduling process, sending downlink control information to the terminal, where the downlink control information carries a resource indication field (SRI) or a resource set indication field (SRSI), a bit width of the resource indication field (SRI) or a bit width of the resource set indication field (SRSI) corresponds to a number of first resource sets; and configuring PUSCH transmission based on a target first resource set indicated by the resource indication field (SRI) or the resource set indication field (SRSI).

In a conventional solution, PUSCH transmission is configured by resources indicated by downlink scheduling, whereas in this solution, downlink scheduling is performed by combining the numbers of antenna ports of resources in a ResourceGroup as a whole. Therefore, the indication field for indicating the ResourceGroup is different from that in the conventional solution. This solution performs downlink scheduling through a resource indication field or a resource set indication field, and a number of bits of the resource indication field or a number of bits of the resource set indication field is determined based on a number of ResourceGroups.

In a possible implementation, in PUSCH transmission, PUSCH non-zero power is linearly scaled based on a ratio of the number of antenna ports used for PUSCH transmission to a number of combined ports corresponding to the target first resource set.

In embodiments of this application, not all antenna ports corresponding to the first resource set are necessarily used for PUSCH transmission. In this case, the terminal performs linear scaling based on the ratio of the number of antenna ports for non-zero power PUSCH transmission within a ResourceGroup to a number of combined ports corresponding to the ResourceGroup, where the number of combined ports is a sum of the numbers of second antenna ports corresponding to all resources within the ResourceGroup.

According to a fifth aspect, a resource configuration method is provided. The method may be performed by a network device, or by a chip configured in the network device.

Specifically, the method includes: generating first resource configuration information, where the first resource configuration information indicates at least one resource and a number of first antenna ports corresponding to the resource, the number of first antenna ports is equal to the number of antenna ports of the terminal, and the number of first antenna ports is determined based on port capability of the terminal; and sending the first resource configuration information to the terminal.

In the solution of this application, the modification to existing resources is very minor, only one type of number of ports configured for resources is newly added, and the protocol modification is minor while enabling 3-port transmission.

According to a sixth aspect, a resource configuration method is provided. The method may be performed by a terminal, or by a chip configured in the terminal.

Specifically, the method includes: receiving first resource configuration information, where the first resource configuration information indicates at least one resource and a number of first antenna ports corresponding to the resource, the number of first antenna ports is equal to the number of antenna ports of the terminal, and the number of first antenna ports is determined based on port capability of the terminal; and performing resource configuration based on the first resource configuration information.

According to a seventh aspect, a communication apparatus is provided. The communication apparatus may be the network device in the foregoing method, or may be a chip used in the network device. The communication apparatus includes: a module configured to perform the method performed by the network device according to the first aspect and any possible implementation thereof, or a module configured to perform the method performed by the network device according to the third aspect and any possible implementation thereof.

According to an eighth aspect, a communication apparatus is provided. The communication apparatus may be the terminal in the foregoing method, or a chip used in the terminal. The communication apparatus includes: a module configured to perform the method performed by the network device according to the second aspect and any possible implementation thereof, or a module configured to perform the method performed by the network device according to the fourth aspect and any possible implementation thereof.

According to a ninth aspect, a communication apparatus is provided. The communication apparatus may be the network device in the foregoing method, or may be a chip used in the network device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to, by using a logic circuit or by executing code instructions, implement the method performed by the network device according to the first aspect and any possible implementation thereof, or configured to perform the method performed by the network device according to the third aspect and any possible implementation thereof.

Optionally, the communication apparatus further includes a memory. Optionally, the communication apparatus further includes a communication interface, and the processor is coupled to the communication interface.

According to a tenth aspect, a communication apparatus is provided. The communication apparatus may be the terminal in the foregoing method, or may be a chip used in the terminal. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to, by using a logic circuit or by executing code instructions, implement the method performed by the terminal according to the second aspect and any possible implementation thereof, or configured to perform the method performed by the terminal according to the fourth aspect and any possible implementation thereof.

Optionally, the communication apparatus further includes a memory. Optionally, the communication apparatus further includes a communication interface, and the processor is coupled to the communication interface.

According to an eleventh aspect, a computer-readable storage medium is provided. The computer-readable storage medium stores a program. The program, when executed, enables a communication apparatus to perform any method according to the first aspect and any possible implementation thereof, or to perform any method according to the second aspect and any possible implementation thereof, or to perform any method according to the third aspect and any possible implementation thereof, or to perform any method according to the fourth aspect and any possible implementation thereof.

According to a twelfth aspect, a program is provided. The program, when executed by a communication apparatus, is configured to perform any method according to the first aspect and any possible implementation thereof, or configured to perform any method according to the second aspect and any possible implementation thereof, or configured to perform any method according to the third aspect and any possible implementation thereof, or configured to perform any method according to the fourth aspect and any possible implementation thereof.

According to a thirteenth aspect, a program product is provided. The program product includes program code. The program code, when executed by a communication apparatus, enables the communication apparatus to perform any method according to the first aspect and any possible implementation thereof, or to perform any method according to the second aspect and any possible implementation thereof, or to perform any method according to the third aspect and any possible implementation thereof, or to perform any method according to the fourth aspect and any possible implementation thereof.

### BRIEF DESCRIPTION OF DRAWINGS

FIG. 1 is a schematic diagram of an architecture of a mobile communication system according to an embodiment of this application;
FIG. 2 is a schematic interaction diagram of a resource configuration method according to an embodiment of this application;
FIG. 3 is a schematic diagram of performing resource configuration based on identifiers of deactivated antenna ports;
FIG. 4 is a schematic interaction diagram of a resource configuration method according to an embodiment of this application;
FIG. 5 is a schematic diagram of a correspondence between resources in a first resource set and each of the first resource set and a second resource set;
FIG. 6 is a schematic diagram of another correspondence between resources in a first resource set and each of the first resource set and a second resource set;
FIG. 7 is a schematic diagram of another correspondence between resources in a first resource set and each of the first resource set and a second resource set;
FIG. 8 is a schematic diagram of another correspondence between resources in a first resource set and each of the first resource set and a second resource set;
FIG. 9 is a schematic interaction diagram of a downlink scheduling method according to an embodiment of this application;
FIG. 10 is a schematic interaction diagram of a resource configuration method according to an embodiment of this application;
FIG. 11 is a schematic block diagram of a communication apparatus according to an embodiment of this application;
FIG. 12 is a schematic block diagram of another communication apparatus according to an embodiment of this application;
FIG. 13 is a schematic block diagram of a communication apparatus according to an embodiment of this application; and
FIG. 14 is a schematic block diagram of another communication apparatus according to an embodiment of this application.

### DESCRIPTION OF EMBODIMENTS

The following describes the technical solutions in this application with reference to the accompanying drawings.

The technical solutions of embodiments of this application may be applied to various communication systems, for example, a long term evolution (Long Term Evolution, LTE) system, an LTE frequency division duplex (Frequency Division Duplex, FDD) system, an LTE time division duplex (Time Division Duplex, TDD) system, new radio (New Radio, NR) in a 5th generation (5th Generation, 5G) mobile communication system, and a future mobile communication system.

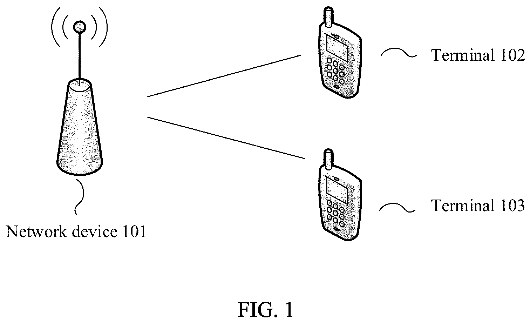

FIG. 1 is a schematic diagram of an architecture of a mobile communication system according to an embodiment of this application. As shown in FIG. 1, the mobile communication system includes a network device 101 and at least one terminal (for example, a terminal 102 and a terminal 103 in FIG. 1). The terminal is connected to the network device in a wireless manner. The network device may be connected to a core network device in a wireless or wired manner. The network device and the core network device may be independent and different physical devices, or functions of the core network device and logical functions of the network device may be integrated into a same physical device, or some of the functions of the core network device and some of the functions of the network device may be integrated into one physical device. The terminal may be at a fixed position or may be movable. FIG. 1 is merely a schematic diagram. The communication system may further include other network devices, for example, may further include a wireless relay device and a wireless backhaul device, which are not shown in FIG. 1. Quantities of network devices and terminals included in the mobile communication system are not limited in this embodiment of this application.

The network device in this embodiment of this application is an entity on a network side that is configured to transmit or receive signals, may be configured to exchange received air frames and internet protocol (IP) packets, and serves as a router between the terminal and a remaining part of an access network, where the remaining part of the access network may include an IP network and the like. The network device may also coordinate attribute management for an air interface. For example, the network device may be an evolved Node B (evolutional Node B, eNB or e-NodeB) in LTE, a new radio controller (new radio controller, NR controller), a gNode B (gNB) in a 5G system, a centralized unit (centralized unit), a new radio base station, a remote radio unit, a micro base station, a relay (relay), a distributed unit (distributed unit), a reception point (transmission reception point, TRP), a transmission point (transmission point, TP) or any other radio access device. A specific technology and a specific device form used for the network device are not limited in the embodiments of this application.

The terminal in this embodiment of this application is an entity on a user side that is configured to receive or transmit signals. The terminal may be a device that provides voice and/or data connectivity to a user, for example, a handheld device or vehicle-mounted device with a wireless connection function. The terminal may alternatively be another processing device connected to a wireless modem. The terminal may communicate with a radio access network (radio access network, RAN). The terminal may also be referred to as a wireless terminal, a subscriber unit (subscriber unit), a subscriber station (subscriber station), a mobile (mobile), a mobile station (mobile station), a remote station (remote station), an access point (access point), a remote terminal (remote terminal), an access terminal (access terminal), a user terminal (user terminal), a mobile station (mobile station, MS), a mobile terminal (mobile terminal, MT), a user agent (user agent), a user device (user device), user equipment (user equipment, UE), or the like.

The terminal may be a mobile terminal such as a mobile phone (or referred to as a "cellular" phone) and a computer provided with a mobile terminal. For example, the terminal may be a portable, pocket-sized, handheld, computer built-in, or vehicle-mounted mobile apparatus, which exchanges voices and/or data with the radio access network. For example, the terminal may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Common terminals include, for example, a mobile phone, a tablet computer, a computer having a wireless transceiver function, a notebook computer, a palmtop computer, a mobile internet device (mobile internet device, MID), a virtual reality (Virtual Reality, VR) terminal, an augmented reality (Augmented Reality, AR) terminal, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The network device and the terminal may be deployed on land, including indoor or outdoor and handheld or vehicle-mounted, or may be deployed on water, or may be deployed on an aircraft, a balloon, and an artificial satellite in the air. Application scenarios of the network device and the terminal are not limited in the embodiments of this application.

Communication may be performed between the network device and the terminal through a licensed spectrum (licensed spectrum), an unlicensed spectrum (unlicensed spectrum), or both a licensed spectrum and an unlicensed spectrum. Communication may be performed between the network device and the terminal by using a spectrum below 6 gigahertz (gigahertz, GHz), or a spectrum above 6 GHz, or both a spectrum below 6 GHz and a spectrum above 6 GHz. A spectrum resource used between the network device and the terminal is not limited in the embodiments of this application.

For ease of understanding, terms in the embodiments of this application are first described.

### (1) Resource

In this application, resources may be understood as time domain, frequency domain, and code domain resources for sending a specific signal or a specific piece of data.

Sounding reference signal (sounding reference signal, SRS) resources are used as an example. In this application, SRS resources may be understood as time domain, frequency domain, and code domain resources for sending an SRS. The SRS is an uplink reference signal sent by a terminal to a network device. After receiving the SRS, the network device may obtain an uplink (uplink, UL) channel from the terminal to the network device based on the SRS, or obtain a downlink (downlink, DL) channel from the network device to the terminal based on channel reciprocity.

It should be noted that the technical solutions of this application are not only applicable to configuring SRS resources, but also applicable to configuring physical downlink control channel (Physical Downlink Control Channel, PDCCH) resources, physical downlink shared channel (Physical Downlink Shared Channel, PDSCH) resources, physical uplink control channel (Physical Uplink Control Channel, PUCCH) resources, physical uplink shared channel (Physical Uplink Shared CHannel, PUSCH) resources, or the like. A type of configured resources is not limited in the technical solutions of this application.

### (2) Antenna port

Antenna ports are used to carry data signals, and antenna ports are multiplexed and work in parallel. It should be noted that, unless otherwise specified in this application, antenna ports refer to logical antenna ports.

Configuration of SRS resources is used as an example. Based on specifications of an existing protocol, a network device configures SRS ResourceSets and SRS resources for a terminal. Generally, one ResourceSet corresponds to one or more SRS resources, and numbers of antenna ports corresponding to SRS resources in one ResourceSet are the same. The number of antenna ports corresponding to each SRS resource is ${N}_{ap}^{SRS} {, N}_{ap}^{SRS} ∈ \left(1, 2, 4\right)$. Each antenna port corresponds to specific time-frequency-code domain resources. In an ideal case, each antenna port occupies different time-frequency-code domain resources to reduce mutual interference. Each antenna port is mapped to one or more physical antenna elements of the terminal.

It should be noted that the antenna configuration of a terminal includes two forms. One form is nTnR, that is, the terminal includes n transmit antennas and n receive antennas. In this case, based on the specifications of the existing protocol, one SRS resource is usually configured to correspond to n antenna ports, and each antenna port corresponds to each receive/transmit antenna. The other form is nTmR, that is, the terminal includes n transmit antennas and m receive antennas. In this case, based on the specifications of the existing protocol, each SRS resource includes n antenna ports. Each antenna port corresponds to specific time-frequency resources. In an ideal case, each SRS port is orthogonal.

### (3) Cyclic shift α of an antenna port

An SRS sequence is used as an example. An SRS pilot sequence corresponding to the terminal is pre-configured in the terminal. The SRS pilot sequence corresponding to the terminal is used as a basic sequence, and a cyclic shift operation is performed on the basic sequence based on a cyclic shift of each antenna port, to obtain an SRS pilot sequence corresponding to each antenna port, so that the SRS pilot sequence corresponding to each antenna port has very good autocorrelation and very low cross-correlation.

A calculation formula of a cyclic shift *αᵢ* of an antenna port *pᵢ* is as follows: ${α}_{i} = 2 π \left(\frac{{n}_{SRS}^{cs , i}}{{n}_{SRS}^{cs , max}}+\frac{{f}_{csh} \left({n}_{f},{n}_{s , f ′}^{μ},l′\right)}{{Kn}_{SRS}^{cs , max}}\right)$ where: ${n}_{SRS}^{cs , i} = \left\{\begin{matrix}\left({n}_{SRS}^{cs}+\frac{{n}_{SRS}^{cs , max} \left⌊\left(\overline{{p}_{ι}}-1000\right)/4\right⌋}{{\overline{N}}_{ap}^{SRS} / 4}\right) mod {n}_{SRS}^{cs , max} if {\overline{N}}_{ap}^{SRS} = 8 and {n}_{SRS}^{cs , max} = 6 \\ \begin{matrix}\left({n}_{SRS}^{cs}+\frac{{n}_{SRS}^{cs , max} \left⌊\left(\overline{{p}_{ι}}-1000\right)/2\right⌋}{{\overline{N}}_{ap}^{SRS} / 2}\right) mod {n}_{SRS}^{cs , max} if {\overline{N}}_{ap}^{SRS} = 4 and {n}_{SRS}^{cs , max} = 6 ; \\ or if {\overline{N}}_{ap}^{SRS} = 8 and {n}_{SRS}^{cs , max} = 12\end{matrix} \\ \left({n}_{SRS}^{cs}+\frac{{n}_{SRS}^{cs , max} \left(\overline{{p}_{ι}}-1000\right)}{{\overline{N}}_{ap}^{SRS}}\right) mod {n}_{SRS}^{cs , max} otherwise\end{matrix}\right.$ where: CS is a cyclic shift (cyclic shift), ${n}_{SRS}^{cs , i}$ represents a cyclic shift parameter of an i-th port, ${n}_{SRS}^{cs , max}$ represents a maximum number of cyclic shifts, ${f}_{csh} \left({n}_{f}{, n}_{s , f ′}^{μ}, l′\right)$ is cyclic shift frequency hopping, which is 0 when not configured, n_{f} is a system frame number, ${n}_{s , f ′}^{μ}$ is a slot number within a frame configured for a subcarrier spacing µ (where the subcarrier spacing µ is configured as Δf = 2^{µ} × 15 [kHz]), l' is an index of an OFDM symbol relative to a reference position, K is a coefficient, ${n}_{SRS}^{cs} ∈ \left\{0,1,…,{n}_{SRS}^{cs , max}-1\right\}$, and ${\overline{N}}_{ap}^{SRS}$ is the number of antenna ports of the terminal.

### (4) Frequency domain start position

A calculation formula of a frequency domain start position ${k}_{0}^{\left({p}_{i}\right)}$ is as follows: ${k}_{0}^{\left({p}_{i}\right)} = {\overline{k}}_{0}^{\left({p}_{i}\right)} + {n}_{offset}^{FH} + {n}_{offset}^{RPFS}$ where: ${k}_{0}^{\left({p}_{i}\right)} = {n}_{shift} {N}_{sc}^{RB} + \left({k}_{TC}^{\left({p}_{i}\right)}+{k}_{offset}^{l ′}\right) + {f}_{coh} \left({n}_{f}{, n}_{s , f ′}^{μ},l′\right) mod {K}_{TC}$ $\begin{matrix}{k}_{TC}^{\left({p}_{i}\right)} \\ = \left\{\begin{matrix}\left({\overline{K}}_{TC}+3 {K}_{TC}/4\right) mod {K}_{TC} if {\overline{N}}_{ap}^{SRS} = 8 , \overline{{p}_{ι}} ∈ \left\{1003, 1007\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 8 , \overline{{p}_{ι}} ∈ \left\{1002, 1006\right\} , and {n}_{SRS}^{cs , max} = 6 \\ \left({\overline{K}}_{TC}+3 {K}_{TC}/4\right) mod {K}_{TC} if {\overline{N}}_{ap}^{SRS} = 8 , \overline{{p}_{ι}} ∈ \left\{1001, 1005\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 8 , \overline{{p}_{ι}} ∈ \left\{1001, 1003, 1005, 1007\right\} , and {n}_{SRS}^{cs , max} = 12 \\ \begin{matrix}\left({\overline{K}}_{TC}+3 {K}_{TC}/2\right) mod {K}_{TC} if {\overline{N}}_{ap}^{SRS} = 8 , \overline{{p}_{ι}} ∈ \left\{1001, 1003, 1005, 1007\right\} , \\ {n}_{SRS}^{cs , max} = 8 , and {n}_{SRS}^{cs} \geq {n}_{SRS}^{cs , max} / {2}^{{n}_{offset}^{FH}}\end{matrix} \\ \left({\overline{K}}_{TC}+3 {K}_{TC}/2\right) mod {K}_{TC} if {\overline{N}}_{ap}^{SRS} = 4 , \overline{{p}_{ι}} ∈ \left\{1001, 1003\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 4 , \overline{{p}_{ι}} ∈ \left\{1001, 1003\right\} , {n}_{SRS}^{cs , max} ∈ \left\{8, 12\right\} , and {n}_{SRS}^{cs} \geq {n}_{SRS}^{cs , max} / 2 \\ {\overline{K}}_{TC} otherwise\end{matrix}\right.\end{matrix}$ where: ${\overline{k}}_{0}^{\left({P}_{i}\right)} ∈ \left\{0,1,…,{k}_{0}^{\left({P}_{i}\right)}-1\right\} , {n}_{offset}^{FH}$ is a frequency domain hopping compensation value, FH is frequency hopping (frequency hopping), ${n}_{offset}^{RPFS}$ is an RB-level partial frequency sounding (RB-level partial frequency sounding) compensation value, *n_{shift}* is a frequency domain offset value, ${N}_{sc}^{RB}$ is a number of subcarriers corresponding to each resource block, ${f}_{coh} \left({n}_{f}{, n}_{s , f ′}^{μ}, l′\right)$ is a function corresponding to comb offset hopping (combOffsetHopping), n_{f} is a system frame number, ${n}_{s , f ′}^{μ}$ is a slot number within a frame configured for a subcarrier spacing µ (where the subcarrier spacing µ is configured as Δf = 2^{µ} × 15 [kHz]), l' is an index of an OFDM symbol relative to a reference position, K_{TC} is a number of combs, and k̅_{TC} ∈ {0,1, ..., K_{TC} - 1}.

A correspondence between K_{TC} and ${n}_{SRS}^{cs , max}$ is shown in Table 1, and Table 1 is a correspondence table between the number of combs and a maximum cyclic shift.

**Table 1**

| K_{TC} | ${n}_{SRS}^{cs , max}$ |
|---|---|
| 2 | 8 |
| 4 | 12 |
| 8 | 6 |

It can be observed from the foregoing formula that the frequency domain start position is determined based on the odd/even grouping of antenna ports *pᵢ*, and different formulas are used to calculate the frequency domain start positions for the odd-numbered antenna port groups and the even-numbered antenna port groups, respectively.

Comb is a manner of distinguishing different subcarriers in frequency domain, different combs represent different subcarrier positions, and SRS resources implement frequency division multiplexing between antenna ports by allocating different combs to different antenna ports. Specifically, combs are a portion of subcarriers extracted at equal intervals in frequency domain, where an extraction interval is referred to as number of combs K_{TC}. Based on the specifications of the existing protocol, usually, K_{TC} ∈(2, 4, 8). For example, when K_{TC} is 2, two combs are obtained through division in frequency domain.

### (5) PUSCH transmission

In a downlink scheduling process, the network device sends downlink control information (Downlink Control Information, DCI) to the terminal. The DCI carries a resource indicator (Resource Indicator). When the configured resource is an SRS resource, the resource indicator is an SRS resource indicator (SRS Resource Indicator, SRI), where an SRI field may be an SRS ResourceID field. A number of bits occupied by an SRI is directly related to a number of SRS resources included in one ResourceSet. Specifically, in a non-codebook (nonCodebook) mode, the SRI occupies $\left⌈{log}_{2}\left({\sum }_{k = 1}^{min \left\{{L}_{max}, {N}_{SRS}\right\}} \left(\begin{matrix}{N}_{SRS} \\ k\end{matrix}\right)\right)\right⌉$ bits, and in a codebook (codebook) mode, the SRI occupies $\left⌈{log}_{2}\left({N}_{SRS}\right)\right⌉$ bits, where Lₘₐₓ is a number of transmission layers, and N_{SRS} is a number of SRS resources.

For PUSCH transmission power, according to 38.213, for uplink power control, during current PUSCH power scaling factor calculation, when uplink full power transmission (ul-FullPowerTransmission) configuration in PUSCH-Config (PUSCH configuration) is not full power mode 1 (fullpowermodel), or full power mode 2 (fullpowermode2), or full power mode (fullpowermode), and when usage (usage) of the ResourceSet is 'Codebook', and the number of antenna ports is not 1, the terminal performs linear scaling based on a ratio of a number of antenna ports for non-zero power PUSCH to a maximum number of antenna ports corresponding to one SRS resource.

Currently, before a network device communicates with a terminal, the network device needs to configure resources for the terminal, so that the terminal can send or receive control information and data on corresponding resources.

A process in which the network device configures resources for the terminal generally includes: a network configures a plurality of resource sets for the terminal, each resource set includes a plurality of resources, and resources in each resource set are configured with a same number of antenna ports. For example, when the network device configures an SRS resource for the terminal, based on the existing protocol, a number of antenna ports corresponding to the SRS resource is ${N}_{ap}^{SRS}$, where ${N}_{ap}^{SRS} ∈ \left(1, 2, 4\right)$. That is, the number of antenna ports corresponding to the SRS resource can only be selected from these three values.

This configuration manner can well adapt to a terminal with a 2-transmit antenna architecture, but an existing 2-transmit antenna architecture may limit uplink throughput of the terminal. Currently, with the evolution of terminals, researchers have found that a 3-transmit antenna architecture can significantly improve uplink throughput of terminals. Although existing NR (New Radio) protocols support 4-transmit antenna and even 8-transmit antenna configurations of terminals, a possibility of commercial use in a short term is very low. Therefore, to improve the uplink throughput of terminals, researchers have begun to invest in the research of terminals with a 3-transmit antenna architecture that are more likely to be commercially used in a short term.

For a terminal that supports a 3-transmit antenna architecture, an antenna configuration of the terminal is 3T. When configuring resources for the terminal, researchers found that based on port capability of the terminal based on port capability of the terminal, the network device needs to configure 3 antenna ports for each SRS resource. However, based on specifications of an existing protocol, a number of antenna ports corresponding to each SRS resource is ${N}_{ap}^{SRS} {, N}_{ap}^{SRS} ∈ \left(1, 2, 4\right)$. Because a value range of the number of antenna ports corresponding to the SRS resource does not include the value 3, it is not possible to directly configure 3 antenna ports for the terminal. That is, the number of antenna ports required by the port capability of the terminal conflicts with the existing protocol. Therefore, based on a conventional configuration solution, it is not possible to enable the network device and the terminal to support uplink 3-antenna port configuration.

To resolve this problem, embodiments of this application provide a resource configuration method. In the method, a network device configures, for each resource, a number of first antenna ports greater than a number of antenna ports of a terminal, and then indicates a deactivated antenna port through first indication information or second indication information, so that a number of finally activated antenna ports is the same as the number of antenna ports of the terminal. When the number of antenna ports required to be configured by port capability of the terminal conflicts with an existing protocol, this solution achieves an objective of forming an equivalent new number of antenna ports through cooperation between the number of first antenna ports and the deactivated antenna port, thereby meeting a requirement of uplink 3-port transmission.

For example, for a terminal that supports a 3-transmit antenna architecture, the network device may configure resources for the terminal corresponding to the number of first antenna ports of 4, and then use the first indication information or the second indication information to indicate one deactivated antenna port and remaining 3 activated antenna ports. This is equivalent to configuring 3 antenna ports for the terminal, thereby enabling the network device and the terminal to support uplink 3-port transmission.

The following describes the resource configuration method provided in the embodiments of this application in detail with reference to the accompanying drawings.

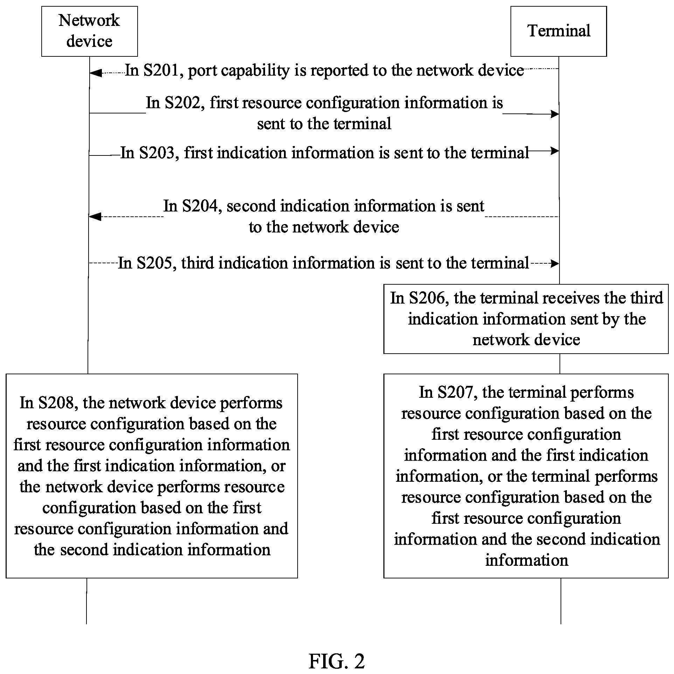

Refer to FIG. 2. FIG. 2 is a schematic interaction diagram of a resource configuration method 200 according to an embodiment of this application. The following describes each step of the method 200 in detail.

In this embodiment of this application, the method 200 is described by using an example in which the method 200 is performed by a terminal and a network device. As an example rather than a limitation, the method 200 may alternatively be performed by a chip of a corresponding terminal and a chip of a corresponding network device.

In S202, the network device sends first resource configuration information to the terminal.

The first resource configuration information indicates at least one resource and a number of first antenna ports corresponding to each resource, the number of first antenna ports is greater than a number of antenna ports of the terminal, the number of first antenna ports indicates a corresponding quantity of antenna port identifiers, and the number of first antenna ports is determined based on port capability of the terminal.

Optionally, the at least one resource is a sounding reference signal SRS resource. Optionally, the at least one resource may alternatively be, for example, a PUSCH resource, a PDSCH resource, a PUCCH resource, a PDCCH resource, or the like. A specific type of the resource is not limited in this application.

In this embodiment of this application, the first resource configuration information is generated by the network device based on specifications of an existing protocol. The number of first antenna ports corresponding to each resource is determined based on port capability of the terminal. When configuring resources for different terminals, the port capability of each terminal needs to be obtained first. The port capability may be indicated by a quantity of logical transmit antennas supported by the terminal.

The terminal may actively report the port capability to the network device, or the terminal may report the port capability to the network device in response to a request from the network device. In this embodiment of this application, before S202, the method 200 may further include S201.

In S201, the terminal reports the port capability to the network device.

For example, the terminal supports 3 logical transmit antennas (hereinafter referred to as transmit antennas), and correspondingly, the port capability reported by the terminal to the network device includes information of 3 antenna ports, which indicates that the number of antenna ports required to be configured for the terminal is 3 ports. For another example, if the terminal supports 8 transmit antennas, the port capability reported by the terminal to the network device includes information of 8 antenna ports, which indicates that the number of antenna ports required to be configured for the terminal is 8 ports.

Optionally, in this embodiment of this application, the network device may enable antenna ports of the terminal. That is, the network device independently determines the number of antenna ports that need to be enabled for the terminal. In this case, the number of antenna ports of the terminal in this embodiment of this application is the number of antenna ports enabled by the network device for the terminal.

In an implementation, the network device does not require the terminal to report the port capability, but directly sends enabling information to the terminal. For example, the terminal supports 8T, but the network device directly enables the antenna ports of the terminal to be 5T, without considering the port capability of the terminal. Correspondingly, in this solution, the number of antenna ports of the terminal is 5.

In another implementation, after receiving the port capability reported by the terminal, the network device determines a value smaller than the port capability reported by the terminal as the number of antenna ports enabled by the network device for the terminal.

For example, the port capability reported by the terminal supports 8T, but the network device determines, based on a plurality of factors, that enabled antenna ports of the terminal are 5T. Correspondingly, in this solution, the number of antenna ports of the terminal is 5.

In this embodiment of this application, after obtaining the port capability reported by the terminal, the network device determines the number of first antenna ports based on the port capability of the terminal and the specifications of the existing protocol. In this embodiment of this application, the existing protocol specifies a value range of a number of antenna ports corresponding to a resource, and the network device may select a value greater than the number of antenna ports of the terminal from the value range of the number of antenna ports corresponding to the resource as the number of first antenna ports. The number of antenna ports of the terminal is the same as the quantity of logical transmit antennas supported by the terminal.

Optionally, the number of first antenna ports is a value that is in the value range of the number of antenna ports corresponding to the resource and that is greater than the number of antenna ports of the terminal and closest to the number of antenna ports of the terminal.

For example, the existing protocol specifies that a value range of a number of antenna ports corresponding to a specific resource is (1, 2, 4). In this case, the port capability of the terminal is to support 3 transmit antennas. When configuring the resource for the terminal, the network device may select 4 from the value range as a number of first antenna ports corresponding to the resource.

For another example, the existing protocol specifies that a value range of a number of antenna ports corresponding to a specific resource is (1, 2, 4, 8). In this case, the port capability of the terminal is to support 6 transmit antennas. When configuring the resource for the terminal, the network device may select 8 from the value range as a number of first antenna ports corresponding to the resource.

It should be noted that the value ranges of the numbers of antenna ports corresponding to different types of resources may be different.

The following describes an implementation process in which the first resource configuration information indicates the at least one resource in the embodiments of this application.

In an implementation, the first resource configuration information may indicate the at least one resource (Resource) through a Resource configuration. Each Resource corresponds to a Resource configuration, and the Resource configuration records a plurality of types of information of the Resource, including, for example, a ResourceID, a number of Resource ports, a comb and cyclic shift configuration, a time domain resource configuration, a frequency domain resource configuration, a precoding configuration, and the like. In this embodiment of this application, the number of Resource ports is defined as the number of first antenna ports. Optionally, the numbers of first antenna ports corresponding to a plurality of Resources are the same.

In another implementation, the first resource configuration information may indicate the at least one resource through two levels of configuration: a resource set (ResourceSet) and a resource (Resource). The network device may configure one or more ResourceSets for the terminal, and each ResourceSet may be configured with one or more Resources. Each ResourceSet corresponds to a ResourceSet configuration, and the ResourceSet configuration records a plurality of types of information of the ResourceSet, including, for example, a ResourceSetID, a Resource type (for example, three types: periodic, semi-persistent, aperiodic), usage (for example, beam management, codebook, non-codebook, antenna selection, or the like), power control related parameters, and the like. In addition, each Resource corresponds to a Resource configuration, and the Resource configuration records a plurality of types of information of the Resource, including, for example, a ResourceID, a number of Resource ports, a comb and cyclic shift configuration, a time domain resource configuration, a frequency domain resource configuration, a precoding configuration, and the like. In this embodiment of this application, the number of Resource ports is defined as the number of first antenna ports. Optionally, the numbers of first antenna ports corresponding to Resources in a same ResourceSet are the same.

In this embodiment of this application, a number of Resources configurable in each ResourceSet, or is related to the port capability supported by the terminal or to the number of antenna ports enabled by the network device for the terminal.

Optionally, information recorded in Resource configurations of a plurality of Resources in one ResourceSet is not completely the same.

Optionally, numbers of Resources included in different ResourceSets may be the same, or partially the same, or completely different.

Optionally, the numbers of first antenna ports corresponding to Resources in different ResourceSets may be the same, or partially the same, or completely different, but are all greater than the number of antenna ports of the terminal.

Optionally, information recorded in ResourceSet configurations of different ResourceSets is not completely the same.

In this embodiment of this application, the number of first antenna ports may be used to determine an antenna port identifier. The antenna port identifier may be understood as an antenna port ID, an antenna port number, or the like.

Configuration of a PDCCH resource is used as an example. For example, if a number of first antenna ports configured by the network device for the PDCCH resource is 5, antenna port identifiers corresponding to the number of first antenna ports start from 2000 and accumulate and may be represented as {2000, 2001, 2002, 2003, 2004}, respectively.

The following describes principles for determining antenna port identifiers in an uplink and a downlink.

In the downlink, the antenna port identifier corresponding to each resource may be determined based on the following principles:

PDSCH resource: The antenna port identifier is 1000+i, where i cycles from 0 to N-1, and N is the number of first antenna ports.

PDCCH resource: The antenna port identifier is 2000+i, where i cycles from 0 to N-1, and N is the number of first antenna ports.

CSI-RS (Channel State Information-Reference Signal, channel state information-reference signal) resource: The antenna port identifier is 3000+i, where i cycles from 0 to N-1, and N is the number of first antenna ports.

SSB (Synchronization Signal Block, synchronization signal block) resource/PBCH (Physical Broadcast Channel, physical broadcast channel) resource: The antenna port identifier is 4000+i, where i cycles from 0 to N-1, and N is the number of first antenna ports.

In the uplink, the antenna port identifier corresponding to each resource may be determined based on the following principles:

PUSCH resource/DMRS (Demodulation Reference Signal, demodulation reference signal) resource: The antenna port identifier is 1000+i, where i cycles from 0 to N-1, and N is the number of first antenna ports.

SRS resource: The antenna port identifier is 1000+i, where i cycles from 0 to N-1, and N is the number of first antenna ports.

PUCCH resource: The antenna port identifier is 1000+i, where i cycles from 0 to N-1, and N is the number of first antenna ports.

PRACH (Physical Random Access Channel, physical random access channel) resource: The antenna port identifier is 1000+i, where i cycles from 0 to N-1, and N is the number of first antenna ports.

For ease of understanding, the following uses an example in which the resources indicated by the first resource configuration information are SRS resources for description.

For example, the port capability of the terminal obtained by the network device is to support 3 transmit antennas. When the network device configures SRS resources for the terminal, the number of first antenna ports configured for each SRS resource is a value that is selected from a value range (1, 2, 4) corresponding to the SRS resource and that is a value greater than the number of antenna ports of the terminal and closest to the number of antenna ports of the terminal, that is, the number of first antenna ports is 4. Based on the foregoing principles for determining the antenna port identifiers corresponding to the SRS resources, the corresponding quantity of antenna port identifiers indicated by the number of first antenna ports may be represented as {1000, 1001, 1002, 1003}.

It should be noted that the first resource configuration information may be sent via downlink control signaling, where the downlink control signaling is, for example, RRC, MAC CE, DCI, or the like.

In S203, the network device sends first indication information to the terminal.

The first indication information carries a first antenna port identifier and/or a second antenna port identifier. The first antenna port identifier is an identifier of a deactivated (disabled) antenna port, and the second antenna port identifier is an identifier of an activated (enabled) antenna port. A quantity of first antenna port identifiers is a difference between the number of first antenna ports and the number of antenna ports of the terminal, and a quantity of second antenna port identifiers is the same as the number of antenna ports of the terminal.

In this embodiment of this application, when generating the first resource configuration information, the network device already determines that the number of first antenna ports corresponding to each resource is not equal to the number of antenna ports of the terminal. In this case, the network device needs to send the first indication information to the terminal to deactivate (disabled) one or more of a plurality of antenna ports corresponding to the number of first antenna ports are deactivated (disabled).

In an implementation, in this embodiment of this application, the first indication information is carried in downlink control signaling. The downlink control signaling is, for example, radio resource control (Radio Resource Control, RRC) signaling, media access control control element (Media Access Control Control Element, MAC CE) signaling, downlink control information (Downlink Control Information, DCI) signaling, or the like. Signaling corresponding to the first indication information and signaling corresponding to the first resource configuration information may be different, or may be the same.

In another implementation, in a resource configuration process, the first resource configuration information and the first indication information may be sent in a pre-defined sending order. The pre-defined sending order may be indicated by the network device to the terminal, or may be determined through negotiation between the terminal and the network device, or may be determined based on a protocol.

In another implementation, in a resource configuration process, the first resource configuration information and the first indication information may be sent simultaneously.

In another implementation, in a resource configuration process, the first indication information may be incorporated into the first resource configuration information and sent to the terminal as part of the first resource configuration information.

In this embodiment of this application, the first indication information may carry both the first antenna port identifier and the second antenna port identifier. For example, the corresponding quantity of antenna port identifiers indicated by the number of first antenna ports is {1000, 1001, 1002, 1003}. The first indication information carries a first antenna port identifier {1001} and carries second antenna port identifiers {1000, 1002, 1003}.

It should be noted that, in this embodiment of this application, the corresponding quantity of antenna port identifiers indicated by the number of first antenna ports are known. When the first indication information carries the first antenna port identifier, the network device (terminal) can automatically identify the second antenna port identifier. Similarly, when the first indication information carries the second antenna port identifier, the network device (terminal) can automatically identify the first antenna port identifier.

For example, the corresponding quantity of antenna port identifiers indicated by the number of first antenna ports is {1000, 1001, 1002, 1003}. If the first indication information carries a first antenna port identifier, and the first antenna port identifier is {1001}, the network device (terminal) can automatically determine that the remaining antenna port identifiers (that is, the second antenna port identifiers) are {1000, 1002, 1003} in sequence.

For another example, the corresponding quantity of antenna port identifiers indicated by the number of first antenna ports is {1000, 1001, 1002, 1003}. If the first indication information carries second antenna port identifiers, and the second antenna port identifiers are {1000, 1001, 1003}, the network device (terminal) can automatically determine that a remaining antenna port identifier (that is, the first antenna port identifier) is {1002}.

Therefore, the first indication information only needs to carry one of the first antenna port identifier and the second antenna port identifier, which can reduce a quantity of fields in the first indication information and reduce overheads.

In addition, it should be noted that, in this embodiment of this application, there may be one or more first antenna port identifiers, and the quantity of first antenna port identifiers is determined by the difference between the number of first antenna ports and the number of antenna ports of the terminal.

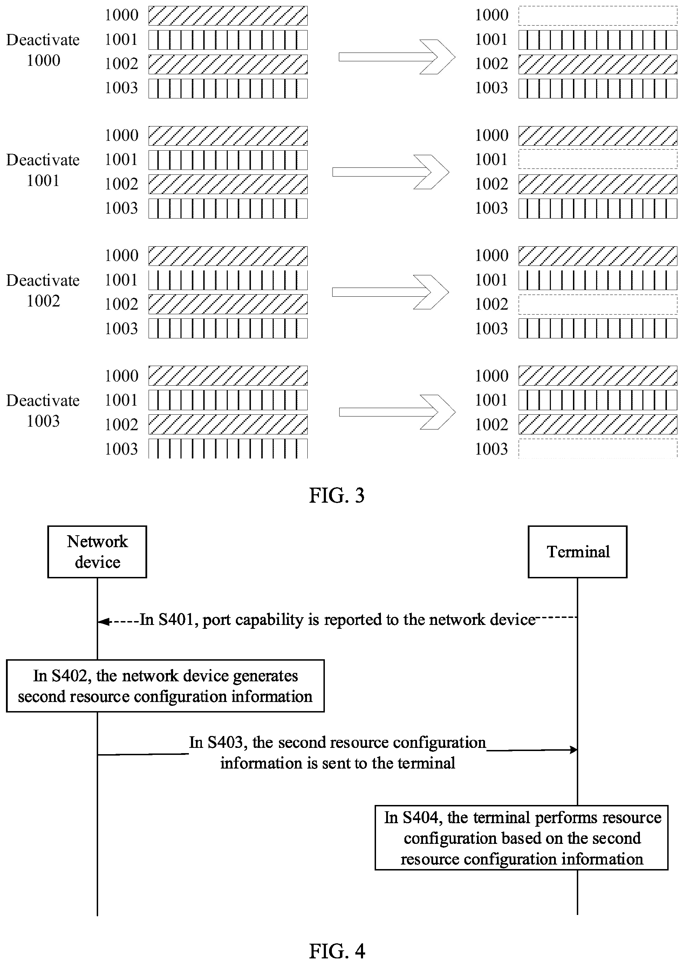

Refer to FIG. 3. FIG. 3 is a schematic diagram of performing resource configuration based on identifiers of deactivated antenna ports. For example, the corresponding quantity of antenna port identifiers indicated by the number of first antenna ports is {1000, 1001, 1002, 1003}. If the first antenna port identifier is {1001}, that is, the identifier of the deactivated antenna port is {1000}, the network device (terminal) removes {1000} from the 4 antenna port identifiers indicated by the number of first antenna ports, and then performs resource configuration only for remaining antenna ports {1001, 1002, 1003}.

If the identifier of the deactivated antenna port is {1001}, the network device (terminal) removes {1001} from the 4 antenna port identifiers indicated by the number of first antenna ports, and then performs resource configuration only for remaining {1000, 1002, 1003}.

If the identifier of the deactivated antenna port is {1002}, the network device (terminal) removes {1002} from the 4 antenna port identifiers indicated by the number of first antenna ports, and then performs resource configuration only for remaining {1000, 1001, 1003}.

If the identifier of the deactivated antenna port is {1003}, the network device (terminal) removes {1003} from the 4 antenna port identifiers indicated by the number of first antenna ports, and then performs resource configuration only for remaining {1000, 1001, 1002}.

In embodiments of this application, the network device determines the deactivated antenna port and informs the terminal through the first indication information, so that the terminal can determine which antenna ports need to be activated through the first indication information, to facilitate resource configuration.

In another embodiment of this application, the terminal may alternatively independently determine the deactivated antenna port and report a deactivated antenna port to the network device. In this case, the method 200 further includes S204.

In S204, the terminal sends second indication information to the network device.

The second indication information carries a first antenna port identifier and/or a second antenna port identifier. The first antenna port identifier is an identifier of a deactivated antenna port, and the second antenna port identifier is an identifier of an activated antenna port. A quantity of first antenna port identifiers is a difference between the number of first antenna ports and the number of antenna ports of the terminal, and a quantity of second antenna port identifiers is the same as the number of antenna ports of the terminal.

In embodiments of this application, when receiving the first resource configuration information, the terminal can determine that the number of first antenna ports corresponding to each resource in the first resource configuration information is not equal to the number of antenna ports of the terminal. In this case, the terminal can determine the deactivated (disabled) antenna port or determine the activated (enable) antenna port based on resource utilization of the terminal, and send second indication information to the network device based on the determined antenna port.

In an implementation, in this embodiment of this application, the second indication information is carried in uplink control signaling.

The uplink control signaling is, for example, radio resource control (Radio Resource Control, RRC) signaling, media access control control element (Media Access Control Control Element, MAC CE) signaling, uplink control information (Uplink Control Information, UCI) signaling, or the like.

It should be noted that, in embodiments of this application, the uplink control signaling carrying the second indication information and the downlink control signaling carrying the first resource configuration information may be different or may be the same.

In an implementation, if the terminal does not receive the first indication information within preset duration after receiving the first resource configuration information, the terminal independently determines the deactivated antenna port and reports the deactivated antenna port to the network device through the second indication information.

In another implementation, the network device and the terminal may agree in advance that the network device determines the deactivated antenna port and sends the deactivated antenna port to the terminal, or the terminal determines the deactivated antenna port and reports the deactivated antenna port to the network device. When the network device and the terminal agree that the terminal determines the deactivated antenna port, the terminal sends the second indication information to the network device after receiving the first resource configuration information.

In another implementation, when the terminal receives the first resource configuration information, if the first antenna port identifier and/or the second antenna port identifier indicated by the first indication information is not found in the first resource configuration information, the terminal may independently determine the deactivated antenna port and report the deactivated antenna port to the network device through the second indication information.

In embodiments of this application, the terminal reports the second indication information to the network device, so that the network device can know which antenna ports need to be activated by the terminal. In this way, the network device can receive the uplink transmission of the terminal on the corresponding antenna ports.

In embodiments of this application, after the terminal sends the second indication information to the network device, the method 200 may further include S205 and S206.

In S205, the network device sends third indication information to the terminal.

After receiving the second indication information, the network device sends the third indication information to the terminal. The third indication information indicates that the network device has obtained the first antenna port identifier and/or the second antenna port identifier carried in the second indication information.

In S206, the terminal receives the third indication information sent by the network device.

In embodiments of this application, after receiving the second indication information, the network device sends third indication information to the terminal to confirm that the network device knows which antenna port is deactivated. In this way, information sharing and an information confirmation process between the terminal and the network device are completed. This ensures that the terminal and the network device perform resource configuration based on same numbers of first antenna ports and deactivated antenna port.

In S207, the terminal performs resource configuration based on the first resource configuration information and the first indication information, or the terminal performs resource configuration based on the first resource configuration information and the second indication information.

In embodiments of this application, when the deactivated antenna port is determined by the network device, the terminal, after receiving the first resource configuration information and the first indication information, performs resource configuration based on the first resource configuration information and the first indication information.

When the deactivated antenna port is determined by the terminal, the terminal, after sending the second indication information to the network device, performs resource configuration based on the first resource configuration information and the second indication information. Alternatively, after receiving the third indication information, the terminal performs resource configuration based on the first resource configuration information and the second indication information.

In embodiments of this application, the network device also needs to perform resource configuration for the terminal on a network side, to receive the uplink transmission of the terminal on the corresponding resources and antenna ports. Correspondingly, the method 200 may further include S208.

In S208, the network device performs resource configuration based on the first resource configuration information and the first indication information, or the network device performs resource configuration based on the first resource configuration information and the second indication information.

When the deactivated antenna port is determined by the network device, the network device, after sending the first indication information to the terminal, performs resource configuration based on the first resource configuration information and the first indication information.

When the deactivated antenna port is determined by the terminal, the network device, after receiving the second indication information, performs resource configuration based on the first resource configuration information and the second indication information. Alternatively, after sending the third indication information to the terminal, the network device performs resource configuration based on the first resource configuration information and the second indication information.

The following describes a process in which the network device (terminal) performs resource configuration based on the first resource configuration information and the first indication information, or the network device (terminal) performs resource configuration based on the first resource configuration information and the second indication information in embodiments of this application.

In an embodiment, the process in which the network device (terminal) performs resource configuration includes: calculating, based on first N antenna port identifiers in a corresponding quantity of antenna port identifiers indicated by the number of first antenna ports and arranged in order of size, cyclic shifts respectively corresponding to the first N antenna port identifiers, where the cyclic shifts are used to generate a signal sequence to be sent, and N is the number of antenna ports of the terminal.

For example, the number of antenna ports of the terminal is 3, at least one resource indicated by the first resource configuration information is an SRS resource, and the number of first antenna ports corresponding to each SRS resource is 4. With reference to the foregoing content, it can be learned that the antenna port identifiers arranged in order of size may be represented as {1000, 1001, 1002, 1003}. It should be noted that, in this application, "arranged in order of size" means arranged in ascending order from smallest to largest. When calculating the cyclic shifts, first 3 antenna port identifiers {1000, 1001, 1002} are taken from the sequence, and cyclic shifts respectively corresponding to the antenna ports {1000, 1001, 1002} are calculated.

It should be noted that, when calculating the cyclic shifts, the identifiers of deactivated antenna ports may not be considered, but rather the activated antenna ports are mapped to the first N antenna ports. For example, if the identifier of the deactivated antenna port is {1001}, it may be determined that the identifiers of the activated antenna ports are {1000, 1002, 1003} in sequence. Then, the identifiers of the activated antenna ports {1000, 1002, 1003} are mapped to the first 3 antenna port identifiers {1000, 1001, 1002}. In this case, ${\overline{N}}_{ap}^{SRS} = 3$, where ${\overline{N}}_{ap}^{SRS}$ is the number of antenna ports of the terminal.

A calculation formula of the cyclic shift *αᵢ* of an antenna port *pᵢ* is as follows: ${α}_{i} = 2 π \left(\frac{{n}_{SRS}^{cs , i}}{{n}_{SRS}^{cs , max}}+\frac{{f}_{csh} \left({n}_{f},{n}_{s , f ′}^{μ},l′\right)}{{Kn}_{SRS}^{cs , max}}\right)$ where: $\begin{matrix}{n}_{SRS}^{cs , i} \\ = \left\{\begin{matrix}\left({n}_{SRS}^{cs}+\frac{{n}_{SRS}^{cs , max} \left⌊\left(\overline{{p}_{ι}}-1000\right)/4\right⌋}{{\overline{N}}_{ap}^{SRS} / 4}\right) mod {n}_{SRS}^{cs , max} if {\overline{N}}_{ap}^{SRS} = 8 and {n}_{SRS}^{cs , max} = 6 \\ \begin{matrix}\left({n}_{SRS}^{cs}+\frac{{n}_{SRS}^{cs , max} \left⌊\left(\overline{{p}_{ι}}-1000\right)/2\right⌋}{{\overline{N}}_{ap}^{SRS} / 2}\right) mod {n}_{SRS}^{cs , max} if {\overline{N}}_{ap}^{SRS} = 4 and {n}_{SRS}^{cs , max} = 6 ; \\ or if {\overline{N}}_{ap}^{SRS} = 8 and {n}_{SRS}^{cs , max} = 12\end{matrix} \\ \left({n}_{SRS}^{cs}+\frac{{n}_{SRS}^{cs , max} \left(\overline{{p}_{ι}}-1000\right)}{{\overline{N}}_{ap}^{SRS}}\right) mod {n}_{SRS}^{cs , max} otherwise\end{matrix}\right.\end{matrix}$ where: ${n}_{SRS}^{cs , i}$ represents a cyclic shift parameter of an i-th port, ${n}_{SRS}^{cs , max}$ represents a maximum number of cyclic shifts, ${f}_{csh} \left({n}_{f}{, n}_{s , f ′}^{μ}, l′\right)$ is cyclic shift frequency hopping, which is 0 when not configured, n_{f} is a system frame number, ${n}_{s , f ′}^{μ}$ is a slot number within a frame configured for a subcarrier spacing µ (where the subcarrier spacing µ is configured as Δf = 2^{µ} × 15 [kHz]), l' is an index of an OFDM symbol relative to a reference position, K is a coefficient, ${n}_{SRS}^{cs} ∈ \left\{0,1,…,{n}_{SRS}^{cs , max}-1\right\}$, and ${\overline{N}}_{ap}^{SRS}$ is the number of antenna ports of the terminal.

In another embodiment, the process in which the network device (terminal) performs resource configuration includes: calculating a frequency domain start position of each antenna port of each resource based on an identifier of an activated antenna port of each resource and the number of antenna ports of the terminal.

It should be noted that, in the embodiments of this application, frequency domain start positions of deactivated antenna ports do not need to be calculated.

For example, if the corresponding quantity of antenna port identifiers indicated by the number of first antenna ports are {1000, 1001, 1002, 1003}, and the identifier of the deactivated antenna port is {1001}, the frequency domain start positions of the activated antenna ports {1000, 1002, 1003} are calculated separately, and the frequency domain start position of the antenna port {1001} is not calculated.

A calculation formula of a frequency domain start position ${k}_{0}^{\left({p}_{i}\right)}$ of an antenna port pᵢ of a specific resource is as follows: ${k}_{0}^{\left({p}_{i}\right)} = {\overline{k}}_{0}^{\left({p}_{i}\right)} + {n}_{offset}^{FH} + {n}_{offset}^{RPFS}$ where: ${k}_{0}^{\left({p}_{i}\right)} = {n}_{shift} {N}_{sc}^{RB} + \left({k}_{TC}^{\left({p}_{i}\right)}+{k}_{offset}^{l ′}\right) + {f}_{coh} \left({n}_{f}{, n}_{s , f ′}^{μ},l′\right) mod {K}_{TC}$ $\begin{matrix}{k}_{TC}^{\left({p}_{i}\right)} \\ = \left\{\begin{matrix}\left({\overline{K}}_{TC}+3 {K}_{TC}/4\right) mod {K}_{TC} if {\overline{N}}_{ap}^{SRS} = 8 , \overline{{p}_{ι}} ∈ \left\{1003, 1007\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 8 , \overline{{p}_{ι}} ∈ \left\{1002, 1006\right\} , and {n}_{SRS}^{cs , max} = 6 \\ \left({\overline{K}}_{TC}+3 {K}_{TC}/4\right) mod {K}_{TC} if {\overline{N}}_{ap}^{SRS} = 8 , \overline{{p}_{ι}} ∈ \left\{1001, 1005\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 8 , \overline{{p}_{ι}} ∈ \left\{1001, 1003, 1005, 1007\right\} , and {n}_{SRS}^{cs , max} = 12 \\ \begin{matrix}\left({\overline{K}}_{TC}+3 {K}_{TC}/2\right) mod {K}_{TC} if {\overline{N}}_{ap}^{SRS} = 8 , \overline{{p}_{ι}} ∈ \left\{1001, 1003, 1005, 1007\right\} , \\ {n}_{SRS}^{cs , max} = 8 , and {n}_{SRS}^{cs} \geq {n}_{SRS}^{cs , max} / {2}^{{n}_{offset}^{FH}}\end{matrix} \\ \left({\overline{K}}_{TC}+3 {K}_{TC}/2\right) mod {K}_{TC} if {\overline{N}}_{ap}^{SRS} = 4 , \overline{{p}_{ι}} ∈ \left\{1001, 1003\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 4 , \overline{{p}_{ι}} ∈ \left\{1001, 1003\right\} , {n}_{SRS}^{cs , max} ∈ \left\{8, 12\right\} , and {n}_{SRS}^{cs} \geq {n}_{SRS}^{cs , max} / 2 \\ {\overline{K}}_{TC} otherwise\end{matrix}\right.\end{matrix}$ where: ${\overline{k}}_{0}^{\left({P}_{i}\right)} ∈ \left\{0,1,…,{k}_{0}^{\left({P}_{i}\right)}-1\right\} , {n}_{offset}^{FH}$ is a frequency domain hopping compensation value, FH is frequency hopping (frequency hopping), ${n}_{offset}^{RPFS}$ is an RB-level partial frequency sounding (RB-level partial frequency sounding) compensation value, n_{shift} is a frequency domain offset value, ${N}_{sc}^{RB}$ is a number of subcarriers corresponding to each resource block, ${f}_{coh} \left({n}_{f}{, n}_{s , f ′}^{μ}, l′\right)$ is a function corresponding to comb offset hopping (combOffsetHopping), n_{f} is a system frame number, ${n}_{s , f ′}^{μ}$ is a slot number within a frame configured for a subcarrier spacing µ (where the subcarrier spacing µ is configured as Δf = 2^{µ} × 15 [kHz]), l' is an index of an OFDM symbol relative to a reference position, K_{TC} is a number of combs, and k̅_{TC} ∈ {0,1, ..., K_{TC} - 1}.

It can be seen from the foregoing formula that the calculation of ${k}_{TC}^{\left({p}_{i}\right)}$ is associated with the antenna port pᵢ.

Continuing with the foregoing example, the identifiers of the activated antenna ports are {1000, 1002, 1003}, where the network device (terminal) can calculate the corresponding ${k}_{TC}^{\left({p}_{i}\right)}$ based on the antenna port {1000}, and then obtain the frequency domain start positions ${k}_{0}^{\left({p}_{i}\right)}$ corresponding to the antenna ports {1000, 1002}. Then, the frequency domain start position ${k}_{0}^{\left({p}_{i}\right)}$ corresponding to the antenna port {1003} is calculated separately.

With reference to the foregoing content, it can be learned that different formulas are used to calculate the frequency domain start positions of the odd-numbered antenna port groups or the even-numbered antenna port groups, respectively. Therefore, a same formula is used to calculate the frequency domain start positions of the antenna ports {1000, 1002}. For the calculation of the frequency domain start position of the antenna port {1002}, refer to the case corresponding to otherwise in the foregoing formula. A different formula is used to calculate the frequency domain start position of the antenna port {1003}, as shown below:

In an embodiment of this application, when calculating the frequency domain start position ${k}_{0}^{\left({P}_{i}\right)}$ of the antenna port {1003}, the involved parameter ${k}_{TC}^{\left({p}_{i}\right)}$ may be calculated by using the following formula: ${k}_{TC}^{\left({p}_{i}\right)} = \left\{\begin{matrix}\left({\overline{k}}_{TC}+\frac{{K}_{TC}}{2}\right) {modK}_{TC} , if {\overline{N}}_{ap}^{SRS} = 3 , {\overline{p}}_{i} ∈ \left\{1001\right\} , and {n}_{SRS}^{cs , max} = 6 \\ \begin{matrix}\left({\overline{k}}_{TC}+\frac{{K}_{TC}}{2}\right) {modK}_{TC} , if {\overline{N}}_{ap}^{SRS} = 3 , {\overline{p}}_{i} ∈ \left\{1001\right\} , and \\ {n}_{SRS}^{cs , max} ∈ \left\{8, 12\right\} , and {n}_{SRS}^{cs} \geq {n}_{SRS}^{cs , max} / 2\end{matrix}\end{matrix}\right.$

In a conventional solution, frequency domain start positions respectively corresponding to a plurality of antenna ports of each resource need to be calculated separately, while in embodiments of this application, the frequency domain start positions of deactivated antenna ports are not calculated, and only the frequency domain start positions of activated antenna ports are calculated.

Through the resource configuration method provided by embodiments of this application, the network device configures, for the terminal, resources and the number of first antenna ports corresponding to each resource based on the specifications of the existing protocol. When a number of antenna ports required by the port capability of the terminal conflicts with the existing protocol, the network device configures, for each resource, a number of first antenna ports greater than the number of antenna ports of the terminal, and then indicates a deactivated antenna port through first indication information or second indication information, so that a number of finally activated antenna ports is the same as the number of antenna ports of the terminal.

That the number of antenna ports required to be configured by the port capability of the terminal conflicts with the existing protocol is, for example, the port capability of the terminal supports 3 transmit antennas, and the number of antenna ports required is 3. However, the existing protocol specifies that a range of the number of first antenna ports configurable for each resource is (1, 2, 4). If the number of antenna ports required to be configured for the terminal cannot be determined from the range, it indicates that a conflict occurs.

However, through this solution, by indicating the deactivated antenna port, the number of finally activated antenna ports can meet the number of antenna ports required to be configured for the terminal. In addition, a plurality of requirements of the terminal can be met. For example, when the terminal supports 5T, when configuring resources, the number of first antenna ports configured for each resource is greater than the number of antenna ports required to be configured for the terminal, for example, the number of first antenna ports is 8. Then, the deactivated antenna ports are indicated through first indication information or second indication information, to remove 3 deactivated antenna ports from the 8 antenna ports corresponding to the number of first antenna ports, so that the number of finally activated antenna ports is the same as the number of antenna ports of the terminal through combination, thereby meeting requirements for uplink 5-port transmission.

Based on the foregoing embodiments, in the embodiments of this application, after the terminal completes resource configuration, uplink transmission may be performed, where the uplink transmission is, for example, PUSCH transmission. In PUSCH transmission, PUSCH non-zero power is linearly scaled based on a number of activated antenna ports indicated by the second antenna port identifier.

The network device sends DCI to the terminal, and the DCI carries an SRI. The terminal performs uplink transmission based on the resources indicated by the SRI. For convenience of description, the resource indicated by the SRI is referred to as a target resource below. In embodiments of this application, when performing PUSCH transmission, the terminal configures data carried on the PUSCH based on relevant parameter information corresponding to the target resource.

In addition, the terminal also linearly scales the PUSCH non-zero power based on the number of activated antenna ports corresponding to the target resource.

Optionally, the terminal linearly scales the PUSCH non-zero power based on a ratio of the number of antenna ports performing PUSCH non-zero power transmission to the number of activated antenna ports of the resource corresponding to PUSCH transmission.

For example, the terminal performs PUSCH transmission based on a resource 1, where the number of activated antenna ports corresponding to the resource 1 is 2 ports, and the number of antenna ports performing PUSCH non-zero power transmission is 1 port. In this case, the terminal linearly scales the PUSCH non-zero power based on a ratio of 1 port to 2 ports.

That is, after the terminal configures resources based on the foregoing embodiments, when performing uplink transmission, the terminal no longer linearly scales the PUSCH non-zero power based on a maximum number of antenna ports (which may be understood as the number of first antenna ports) corresponding to the resources, but linearly scales the PUSCH non-zero power based on the number of activated antenna ports. This process does not consider the number of deactivated antenna ports.

Embodiments of this application further provide another resource configuration method. The following describes the method. As shown in FIG. 4, FIG. 4 shows a schematic interaction diagram of a resource configuration method 400 according to an embodiment of this application. The following describes each step of the method 400 in detail. In this embodiment of this application, the method 400 is described by using an example in which the method 400 is performed by a terminal and a network device. As an example rather than a limitation, the method 400 may alternatively be performed by a chip of a corresponding terminal and a chip of a corresponding network device.

An objective of the embodiments of this application is to implement uplink transmission with a new number of ports based on multi-port combination, and the number of ports within the combination may be the same or different.

In S402, the network device generates second resource configuration information.

The second resource configuration information indicates a plurality of first resource sets and numbers of second antenna ports corresponding to resources in each first resource set, where a sum of the numbers of second antenna ports corresponding to resources in the first resource set is the same as the number of antenna ports of the terminal, and spatial domain information and power control parameters of resources in the first resource set are the same.

Optionally, the at least one resource is a sounding reference signal SRS resource. Optionally, the at least one resource may alternatively be, for example, a PUSCH resource, a PDSCH resource, a PUCCH resource, a PDCCH resource, or the like. A specific type of the resource is not limited in this application.

In embodiments of this application, the network device may configure one or more first resource sets for the terminal, and each first resource set may be configured with one or more resources. The first resource set supports resource configurations with a plurality of different numbers of antenna ports. That is, the numbers of second antenna ports corresponding to resources in a first resource set may be the same, different, or partially the same. On this basis, the numbers of second antenna ports corresponding to resources in a first resource set are combined, so that a number of combined antenna ports is the same as the number of antenna ports of the terminal, thereby meeting the number of antenna ports required by the terminal.

The following describes a process of determining the number of second antenna ports corresponding to the resources in the first resource set in the embodiments of this application.

In embodiments of this application, a total number of antenna ports corresponding to a first resource set is determined based on the port capability of the terminal. When configuring resources for the terminal, it is necessary to first obtain the port capability of each terminal to facilitate determining the total number of antenna ports corresponding to the first resource set. The port capability may be indicated by a quantity of logical transmit antennas supported by the terminal.

The terminal may actively report the port capability to the network device, or the terminal may report the port capability to the network device in response to a request from the network device. In embodiments of this application, the method 400 may further include S401 before S402.

In S401, the terminal reports the port capability to the network device.

For example, if the terminal supports 3 transmit antennas, the port capability reported by the terminal to the network device includes information of 3 antenna ports, which indicates that the number of antenna ports required to be configured for the terminal is 3 ports, that is, the total number of antenna ports corresponding to the first resource set is 3 ports. For another example, if the terminal supports 6 transmit antennas, the port capability reported by the terminal to the network device includes information of 6 antenna ports, which indicates that the number of antenna ports required to be configured for the terminal is 6 ports, that is, the total number of antenna ports corresponding to the first resource set is 6 ports.

Optionally, in this embodiment of this application, the network device may enable antenna ports of the terminal. That is, the network device independently determines the number of antenna ports that need to be enabled for the terminal. In this case, the number of antenna ports of the terminal in this embodiment of this application is the number of antenna ports enabled by the network device for the terminal.

In an implementation, the network device does not require the terminal to report the port capability, but directly sends enabling information to the terminal. For example, the terminal supports 8T, but the network device directly enables the antenna ports of the terminal to be 5T, without considering the port capability of the terminal. Correspondingly, in this solution, the number of antenna ports of the terminal is 5.

In another implementation, after receiving the port capability reported by the terminal, the network device determines a value smaller than the port capability reported by the terminal as the number of antenna ports enabled by the network device for the terminal.

For example, the port capability reported by the terminal supports 8T, but the network device determines, based on a plurality of factors, that enabled antenna ports of the terminal are 5T. Correspondingly, in this solution, the number of antenna ports of the terminal is 5.

In embodiments of this application, after obtaining the total number of antenna ports corresponding to the first resource set, it is necessary to configure the number of second antenna ports corresponding to each resource in the first resource set. This process is also related to a number of resources in the first resource set.

For example, if the first resource set includes 3 resources, and the total number of antenna ports corresponding to the first resource set is 3 ports, the number of second antenna ports corresponding to each of the 3 resources is 1 port. If the first resource set includes 2 resources, and the total number of antenna ports corresponding to the first resource set is 3 ports, in these 2 resources, the number of second antenna ports corresponding to one resource is 2 ports, and the number of second antenna ports corresponding to the other resource is 1 port.

In an implementation, the numbers of second antenna ports corresponding to resources in the first resource set may be all the same, or partially the same, or all different.

It should be noted that there is no necessary connection between the numbers of second antenna ports corresponding to resources in a first resource set, and therefore the numbers of second antenna ports do not constrain each other. However, it is necessary to satisfy a constraint that the sum of the numbers of second antenna ports corresponding to all resources in a first resource set is equal to the number of antenna ports of the terminal.

It should be noted that, in an embodiment of this application, values of the numbers of second antenna ports corresponding to resources in the first resource set need to comply with the specifications of the existing protocol. That is, the existing protocol specifies a value range of the number of antenna ports corresponding to a resource. Therefore, when configuring the number of second antenna ports for each resource in the first resource set, the number of second antenna ports is a value within the value range.

For example, if a value range of the number of antenna ports corresponding to a specific resource is (1, 2, 4), the number of second antenna ports corresponding to each resource in the first resource set can only be one of these three values.

For another example, if the first resource set includes 3 resources, and the total number of antenna ports corresponding to the first resource set is 7 ports, in these 3 resources, the number of second antenna ports corresponding to resource#1 may be 1 port, the number of second antenna ports corresponding to resource#2 may be 2 ports, and the number of second antenna ports corresponding to resource#3 may be 4 ports. It should be noted that, in this example, a combination of the numbers of second antenna ports corresponding to the three resources in the first resource set is only an example illustration, and another combination is also possible in this application, which are not exhaustively listed in this application.

In another implementation, in an embodiment of this application, the value range of the number of antenna ports corresponding to resources specified in the existing protocol may be expanded by adding the number of ports configured for resources in the existing protocol. For example, the value range may be expanded from (1, 2, 4) to (1, 2, 4, 8), or the value range may be expanded from (1, 2, 4) to (1, 2, 3, 4), or the value range may be expanded from (1, 2, 4) to (1, 2, 3, 4, 8), or the like. In this example, the added number of ports configured for resources is only an example and does not constitute a limitation on the added number of ports configured for resources in this solution. In an embodiment of this application, the number of second antenna ports corresponding to each resource in the first resource set may be the added number of ports configured for resources.

For example, if the first resource set includes 3 resources, and the total number of antenna ports corresponding to the first resource set is 7 ports, in these 3 resources, the number of second antenna ports corresponding to resource#1 may be 1 port, the number of second antenna ports corresponding to resource#2 may be 3 ports, and the number of second antenna ports corresponding to resource#3 may be 3 ports. There may alternatively be another combination, which is not exhaustively listed herein.

The following describes a process of determining the first resource set and each resource in the first resource set in embodiments of this application.

In an implementation, the second resource configuration information may indicate the plurality of first resource sets through a ResourceGroup configuration. Each ResourceGroup corresponds to a ResourceGroup configuration, and the ResourceGroup configuration records a plurality of types of information of the ResourceGroup, including, for example, a first resource set identifier (ResourceGroupID), a Resource type, usage, power control related parameters, and the like. The ResourceGroup configuration further includes a ResourceIDlist, and the ResourceIDlist lists identifiers (that is, ResourceID) of all resources included in a first resource set (ResourceGroup).

The second resource configuration information may further indicate the resources in the first resource set through a Resource configuration. Each Resource corresponds to a Resource configuration, where the Resource configuration includes, for example, an identifier of the resource (ResourceID), a number of Resource ports, a comb and cyclic shift configuration, a time domain resource configuration, a frequency domain resource configuration, a precoding configuration, or the like, and the number of ports of the Resource is the number of second antenna ports.

In an embodiment, the second resource configuration information includes a first resource set identifier corresponding to each resource in the first resource set.

The second resource configuration information indicates the identifier of the first resource set corresponding to each Resource. For example, if Resource#1 corresponds to a first resource set identifier of ResourceGroup#2, the second resource configuration information includes a correspondence between Resource#1 and ResourceGroup#2.

The second resource configuration information may indicate a correspondence between the first resource set and each resource in the first resource set through a ResourceGroup configuration or a Resource configuration.

Optionally, the first resource set identifier corresponding to each resource in the first resource set is configured in the ResourceGroup configuration. For example, the ResourceGroupID may be marked after each ResourceID listed in the ResourceIDlist, and the ResourceGroupID is an ID of a first resource set to which a Resource indicated by the ResourceID belongs.

Optionally, the first resource set identifier corresponding to each resource in the first resource set is configured in the Resource configuration. For a specific Resource, a Resource configuration of the Resource includes a ResourceID. In embodiments of this application, the ResourceGroupID may be marked after the ResourceID, and the ResourceGroupID is an ID of a first resource set to which the Resource indicated by the ResourceID belongs.

In another embodiment, the second resource configuration information further includes a second resource set identifier corresponding to each resource in the first resource set, where the second resource set identifier is an identifier of the second resource set to which the first resource set belongs.

That is, in embodiments of this application, the second resource configuration information includes a first resource set identifier and a second resource set identifier corresponding to each resource in the first resource set, where the second resource set identifier is an identifier of the second resource set to which the first resource set belongs.

In embodiments of this application, the second resource configuration information may indicate the second resource set through a ResourceSet configuration. The ResourceSet configuration includes, for example, a second resource set identifier (ResourceSetID), a Resource type, usage, power control related parameters, and the like. The ResourceSet configuration further includes a ResourceIDlist, and the ResourceIDlist lists identifiers (ResourceID) of all resources included in one or more first resource sets (ResourceGroup).

There are one or more second resource sets.

Optionally, the first resource set identifier and the second resource set identifier corresponding to each resource in the first resource set are configured in the ResourceSet configuration. For a specific second resource set, a ResourceSet configuration corresponding to the second resource set includes a ResourceSetID of the second resource set, and further includes a ResourceIDlist, where the ResourceIDlist lists the ResourceID of each resource in one or more first resource sets included in the second resource set. In embodiments of this application, the first resource set identifier (ResourceGroupID) may be marked after the ResourceID.

It may be understood that the one second resource set includes one or more first resource sets, and the one or more first resource sets include one or more resources, and which first resource set each resource belongs to may be indicated by the ResourceGroupID marked after the ResourceID.

It should be noted that total numbers of antenna ports corresponding to a plurality of first resource sets (ResourceGroup) in a same second resource set (ResourceSet) are the same. For example, if a ResourceGroup in a specific ResourceSet includes a Resource combination of 2 ports + 4 ports, resource combination solutions of other ResourceGroups in the ResourceSet are all 2 ports + 4 ports.

Optionally, the first resource set identifier and the second resource set identifier corresponding to each resource in the first resource set are configured in the Resource configuration. For a specific Resource, a Resource configuration of the Resource includes a ResourceID. In embodiments of this application, the first resource set identifier (ResourceGroupID) and the second resource set identifier (ResourceSetID) may be marked after the ResourceID. The ResourceGroupID is an ID of a first resource set to which a Resource indicated by the ResourceID belongs. The ResourceSetID is an ID of a second resource set to which the Resource indicated by the ResourceID belongs.

Optionally, in the plurality of first resource sets, the second resource set identifiers corresponding to resources in some of the first resource sets are the same, and the second resource set identifiers corresponding to resources in some of the first resource sets are different.

The solution includes the following cases. The following describes a correspondence between resources in a first resource set and each of the first resource set and a second resource set in this embodiment with reference to FIG. 5 to FIG. 7.

1. If ResourceGroupIDs corresponding to some Resources are the same, it indicates that these Resources belong to a same first resource set. If ResourceSetIDs corresponding to these Resources are the same, it indicates that the first resource set to which these Resources belong belongs to a second resource set indicated by the ResourceSetID. That is, one second resource set includes one first resource set, and the first resource set includes these some Resources.

2. If ResourceGroupIDs corresponding to some Resources are different, it indicates that these Resources belong to different first resource sets. If ResourceSetIDs corresponding to these Resources are the same, it indicates that these Resources belong to a same second resource set. That is, the second resource set includes two or more first resource sets, and each first resource set includes one or more resources.

As shown in FIG. 5, FIG. 5 is a schematic diagram of a correspondence between resources in a first resource set and each of the first resource set and a second resource set. The network device configures a second resource set ResourceSet1, which includes a plurality of first resource sets ResourceGroup1, ResourceGroup2, ..., and each ResourceGroup includes a plurality of resources, for example, ResourceGroup1 includes Resourcel and Resource2. Correspondingly, the ResourceGroupIDs corresponding to the resources in a same first resource set are the same, and the ResourceSetIDs are also the same. The ResourceGroupIDs corresponding to the resources in different first resource sets are different, and the ResourceSetIDs are the same.

It should be noted that when the numbers of second antenna ports of resources in a first resource set are different, it indicates that the numbers of second antenna ports corresponding to resources in a second resource set to which the first resource set belongs may be different.

3. If ResourceGroupIDs corresponding to some Resources are the same, it indicates that these Resources belong to a same first resource set. If ResourceSetIDs corresponding to these resources are different, it indicates that these resources belong to different second resource sets. That is, resources in the same first resource set come from different second resource sets.

As shown in FIG. 6, FIG. 6 is a schematic diagram of another correspondence between resources in a first resource set and each of the first resource set and a second resource set. It can be seen that two resources Resource1-1 and Resource2-1 included in ResourceGroup1 come from ResourceSet1 and ResourceSet2, respectively. Two resources Resource1-2 and Resource2-2 included in ResourceGroup2 come from ResourceSet1 and ResourceSet2, respectively.

For example, the first resource set includes two resources: resource#1 and resource#2, where resource#1 corresponds to {ResourceGroup2, ResourceSet1}, and resource#2 corresponds to {ResourceGroup2, ResourceSet3}.

4. If ResourceGroupIDs corresponding to some resources are different, it indicates that these resources belong to different first resource sets. If ResourceSetIDs corresponding to these resources are different, it indicates that these resources belong to different second resource sets.

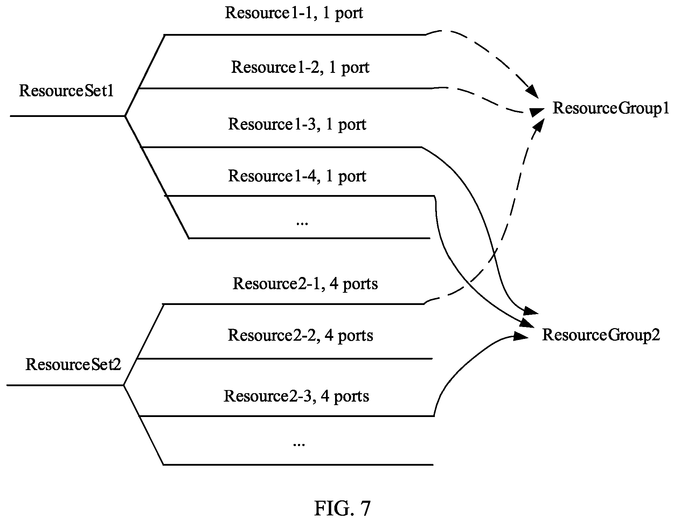

As shown in FIG. 7, FIG. 7 is a schematic diagram of another correspondence between resources in a first resource set and each of the first resource set and a second resource set. It can be seen that in three resources Resource1-1, Resource1-2, and Resource2-1 included in ResourceGroup1, two come from ResourceSet1, and the other one comes from ResourceSet2. In three resources Resource1-3, Resource1-4, and Resource2-3 included in ResourceGroup2, two come from ResourceSet1, and the other one comes from ResourceSet2.

That is, the second resource set identifiers corresponding to resources in one first resource set may be partially the same and partially different.

Optionally, the second resource set identifiers corresponding to resources in a same first resource set are not completely the same. That is, in the resources in the same first resource set, some belong to the same second resource set, and others belong to other second resource sets.

Optionally, the numbers of second antenna ports corresponding to resources belonging to a same second resource set are the same.

Refer to FIG. 6, it can be seen that the number of second antenna ports corresponding to Resource1-1 and Resource1-2 corresponding to ResourceSet1 are both 1 port; and the number of second antenna ports corresponding to Resource2-1 and Resource2-2 corresponding to ResourceSet2 are both 2 ports.

Optionally, the numbers of second antenna ports corresponding to resources belonging to different second resource sets are not completely the same.

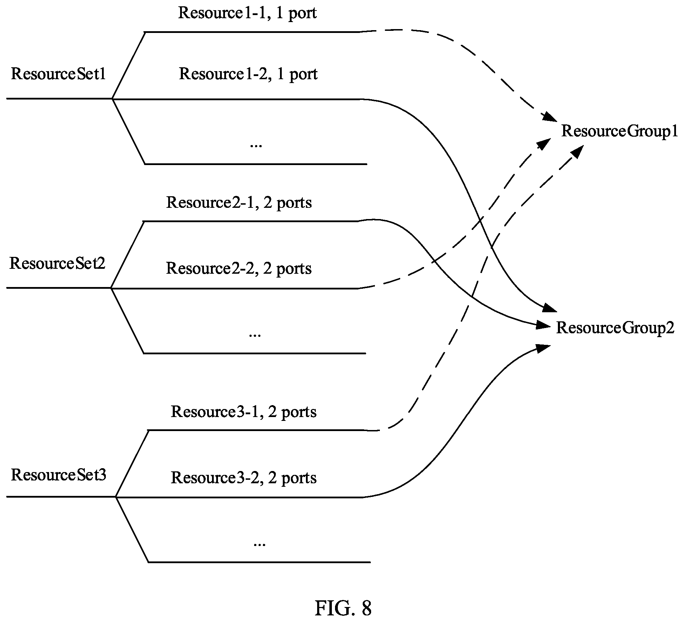

Refer to FIG. 8. FIG. 8 is a schematic diagram of another correspondence between resources in a first resource set and each of the first resource set and a second resource set. FIG. 8 shows three ResourceSets: ResourceSet1, ResourceSet2, and ResourceSet3, where the numbers of second antenna ports corresponding to Resource1-1 and Resource1-2 corresponding to ResourceSet1 are both 1 port, and the numbers of second antenna ports corresponding to Resource2-1 and Resource2-2 corresponding to ResourceSet2 are both 2 ports. The numbers of second antenna ports corresponding to Resource3-1 and Resource3-2 corresponding to ResourceSet3 are both 2 ports.

It can be seen that the numbers of second antenna ports of the Resources corresponding to ResourceSet2 and ResourceSet3 are the same, the numbers of second antenna ports of the Resources corresponding to ResourceSet2 and ResourceSet1 are different, and the numbers of second antenna ports of the Resources corresponding to ResourceSet3 and ResourceSet1 are different.

FIG. 8 further shows ResourceGroup1 and ResourceGroup2 as an example, where three resources in ResourceGroup 1 correspond to different ResourceSets respectively, and three resources in ResourceGroup2 correspond to different ResourceSets respectively.

During uplink transmission, it is necessary to configure and process the uplink transmission through spatial domain information and power control parameters. Different configurations correspond to different beam directions. If beam directions corresponding to resources in the first resource set are different, combining second antenna ports corresponding to a plurality of resources may result in an inability to combine the beams, or cause a problem of beam cancellation. To achieve better combining of beams corresponding to different resources in a multi-port combination process, this application configures same spatial domain information and power control parameters for resources in a same first resource set.

The spatial domain information includes a serving cell identifier and an identifier of a reference signal, and the reference signal includes a synchronization signal block index (Synchronization Signal Block Index, SSB- Index), a channel state information reference signal index (Channel State Information Reference Signal Index, CSI-RS-Index), an SRS resource identifier (SRS ResourceID), and an uplink bandwidth part (UplinkBWP).

The power control parameters include a path loss compensation configuration parameter (alpha), a target reception power (p0), a path loss reference signal (pathlossReferenceRS), and an SRS power control adjustment state (SRS-powercontroladjustmentstates).

An example in which resources in the first resource set indicated by the second resource configuration information are SRS resources is used. Each SRS resource in the same first resource set is configured with the same spatial domain information and power control parameters. For spatial domain information (SRS-SpatialRelationInfo), each resource in the first resource set is configured with the same servingCellID and referenceSignal, where the referenceSignal includes a synchronization signal block (SSB) index, a channel state information reference signal (CSI-RS) index, a sounding reference signal (SRS) resource identifier (SRS), and an uplink bandwidth part (BWP). SRS resources in the first resource set use a same spatial domain filter.

Optionally, in embodiments of this application, the spatial domain information and power control parameters of resources in a plurality of first resource sets belonging to the same second resource set are partially the same or different.

Optionally, in embodiments of this application, different spatial domain information and power control parameters may be configured for different first resource sets through a ResourceSet configuration.

For example, ResourceSet#2 includes three first resource sets, which are represented as ResourceGroup#1, ResourceGroup#2, and ResourceGroup#3, respectively. Spatial domain information and power control parameters of resources in ResourceGroup#1 and ResourceGroup#2 are the same, spatial domain information and power control parameters of resources in ResourceGroup#1 and ResourceGroup#3 are different, or spatial domain information and power control parameters of resources in ResourceGroup#2 and ResourceGroup#3 are different.

For another example, ResourceSet#2 includes three first resource sets, which are represented as ResourceGroup#1, ResourceGroup#2, and ResourceGroup#3, respectively. Spatial domain information and power control parameters of resources corresponding to the three first resource sets are all different.

Based on the foregoing embodiments, in embodiments of this application, the second resource configuration information may further indicate the plurality of first resource sets through a ResourceSet configuration. The ResourceSet configuration includes, for example, a first resource set identifier (ResourceGroupID), a Resource type, usage, power control related parameters, and the like. The ResourceGroup configuration further includes a ResourceIDlist, and the ResourceIDlist lists identifiers (that is, ResourceIDs) of all resources included in the first resource set (ResourceGroup).

The second resource configuration information further indicates each resource in each first resource set through a Resource configuration. Each Resource corresponds to a Resource configuration. The Resource configuration includes, for example, a resource identifier (ResourceID), a number of Resource ports, a comb and cyclic shift configuration, a time domain resource configuration, a frequency domain resource configuration, a precoding configuration, and the like. In this embodiment of this application, the number of Resource ports is defined as the number of second antenna ports.

A correspondence between each Resource and a first resource set to which the Resource belongs needs to be indicated in the second resource configuration information. For example, if a first resource set identifier corresponding to Resource#1 is ResourceGroup#2, the second resource configuration information includes a correspondence between Resource#1 and ResourceGroup#2.

In an embodiment, the second resource configuration information includes a first resource set identifier corresponding to each resource in the first resource set.

The second resource configuration information may indicate a correspondence between the first resource set and each resource in the first resource set through a ResourceGroup configuration or a Resource configuration.

Optionally, the first resource set identifier corresponding to each resource in the first resource set is configured in the ResourceSet configuration. For example, the ResourceGroupID may be marked after each ResourceID listed in the ResourceIDlist included in the ResourceSet configuration, and the ResourceGroupID is an ID of a first resource set to which a Resource indicated by the ResourceID belongs.

Optionally, the first resource set identifier corresponding to each resource in the first resource set is configured in the Resource configuration. For a specific Resource, a Resource configuration of the Resource includes a ResourceID. In embodiments of this application, the ResourceGroupID may be marked after the ResourceID, and the ResourceGroupID is an ID of a first resource set to which the Resource indicated by the ResourceID belongs.

In S403, the network device sends the second resource configuration information to the terminal.

In S404, the terminal performs resource configuration based on the second resource configuration information.

To maintain consistency with the behavior of the terminal, correspondingly, the network device may also configure the terminal as described in S404.

The process in which the network device (terminal) performs resource configuration includes: calculating cyclic shifts and frequency domain start positions of antenna ports.

For example, a specific first resource set includes 2 resources, where one resource corresponds to a number of second antenna ports of 1 port, and the other resource corresponds to a number of second antenna ports of 2 ports.

For the first resource, one antenna port identifier corresponding to the resource is determined, and the cyclic shift of the antenna port and the frequency domain start position corresponding to the resource are calculated by using the calculation formula disclosed above based on the antenna port identifier. Details are not described in this application.

For the second resource, two antenna port identifiers, for example, {1000, 1001}, corresponding to the resource are determined. Then, the cyclic shifts and frequency domain start positions corresponding to the two antenna ports are calculated respectively by using the calculation formula disclosed above. Details are not described in this application.

The solution provided by embodiments of this application supports transmission by combining numbers of ports corresponding to different resources, and configures same spatial domain information and power control parameters for different resources to ensure that sending signals through different resources achieves a same result as sending signals through a same resource.

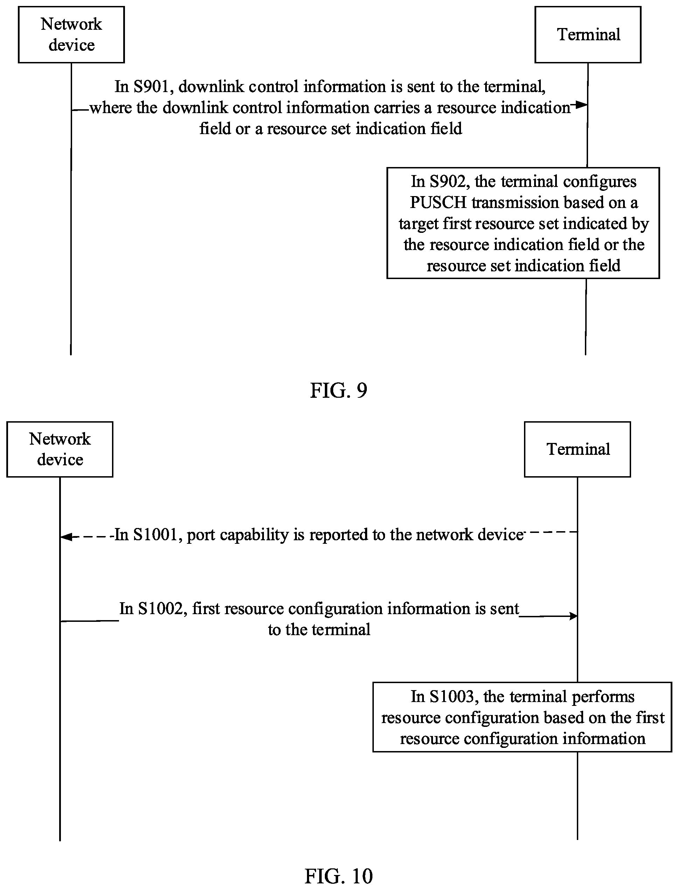

Based on the foregoing embodiments, in the embodiments of this application, after the network device (terminal) completes resource configuration, the network device can perform downlink scheduling. As shown in FIG. 9, FIG. 9 is a schematic interaction diagram of a downlink scheduling method 900 according to an embodiment of this application. The following describes each step of the method 900 in detail.

In S901, the network device sends downlink control information to the terminal, where the downlink control information carries a resource indication field or a resource set indication field.

In S902, the terminal configures PUSCH transmission based on a target first resource set indicated by the resource indication field or the resource set indication field.

A bit width of the resource indication field or a bit width of the resource set indication field corresponds to a number of the first resource sets, and the target first resource set indicated by the resource indication field or the resource set indication field is used to configure PUSCH transmission.

In embodiments of this application, the bit width of the resource indication field refers to a number of bits occupied by the resource indication field, and the bit width of the resource set indication field refers to a number of bits occupied by the resource set indication field.

In an implementation, an indication for indicating the number of combined ports may be configured for the resource indication field or the resource set indication field through high layer parameters. When the high layer parameters configure the indication, the bit width of the resource indication field or the bit width of the resource set indication field is related to a number of ResourceGroups in one ResourceSet.

In embodiments of this application, the downlink control information carries one of the resource indication field or the resource set indication field. The resource indication field and the resource set indication field have the same function, which is to indicate a target first resource set, where the target first resource set is one of a plurality of first resource sets, and the terminal can use antenna port combinations corresponding to a plurality of resources in the target first resource set for PUSCH transmission.

In embodiments of this application, the network device sends DCI to the terminal, where the DCI carries the resource indication field or the resource set indication field, and the terminal performs uplink transmission based on the target first resource set indicated by the resource indication field or the resource set indication field. In embodiments of this application, when performing PUSCH transmission, the terminal configures data carried on the PUSCH based on relevant parameter information corresponding to the target first resource set.

In addition, in embodiments of this application, in PUSCH transmission, the terminal linearly scales PUSCH non-zero power based on a sum of the numbers of second antenna ports corresponding to resources in the target first resource set.

For example, the target first resource set includes 2 resources, and the numbers of second antenna ports corresponding to the resources are 2 ports and 4 ports. In this case, when performing PUSCH transmission, the terminal uses 2 ports + 4ports = 6 ports to linearly scale the PUSCH non-zero power.

Optionally, in PUSCH transmission, the terminal linearly scales the PUSCH non-zero power based on a ratio of the number of antenna ports for PUSCH transmission to the number of combined ports corresponding to the target first resource set.

In embodiments of this application, not all antenna ports corresponding to the first resource set are necessarily used for PUSCH transmission. In this case, the terminal performs linear scaling based on the ratio of the number of antenna ports for non-zero power PUSCH transmission within a ResourceGroup to the number of combined ports corresponding to the ResourceGroup, where the number of combined ports is a sum of the numbers of second antenna ports corresponding to all resources within the ResourceGroup.

Refer to FIG. 10. FIG. 10 is a schematic interaction diagram of a resource configuration method 1000 according to an embodiment of this application. The following describes each step of the method 1000 in detail.

In S1002, the network device sends first resource configuration information to the terminal.

The first resource configuration information indicates at least one resource and a number of first antenna ports corresponding to the resource, the number of first antenna ports is equal to a number of antenna ports of the terminal, and the number of first antenna ports is determined based on port capability reported by the terminal.

Optionally, the at least one resource is a sounding reference signal SRS resource. Optionally, the at least one resource may alternatively be, for example, a PUSCH resource, a PDSCH resource, a PUCCH resource, a PDCCH resource, or the like. A specific type of the resource is not limited in this application.

In embodiments of this application, the number of first antenna ports corresponding to each resource is determined based on the port capability of the terminal. When configuring resources for different terminals, the port capability of each terminal needs to be obtained. The port capability may be indicated by a quantity of logical transmit antennas supported by the terminal. The terminal may actively report the port capability to the network device, or the terminal may report the port capability to the network device in response to a request from the network device. Therefore, the method 1000 may further include S1001 before S 1002.

In S1001, the terminal reports the port capability to the network device.

For example, if the terminal supports 3 transmit antennas (hereinafter referred to as transmit antennas), the port capability reported by the terminal to the network device includes information of 3 antenna ports, which indicates that the number of antenna ports required to be configured for the terminal is 3 ports. In this case, the number of first antenna ports corresponding to each resource configured by the network device for the terminal is 3 ports.

For another example, if the terminal supports 4 transmit antennas, the port capability reported by the terminal to the network device includes information of 4 antenna ports, which indicates that the number of antenna ports required to be configured for the terminal is 4 ports. In this case, the number of first antenna ports corresponding to each resource configured by the network device for the terminal is 4 ports.

For another example, if the terminal supports 7 transmit antennas, the port capability reported by the terminal to the network device includes information of 7 antenna ports, which indicates that the number of antenna ports required to be configured for the terminal is 7 ports. In this case, the number of first antenna ports corresponding to each resource configured by the network device for the terminal is 7 ports.

Based on the foregoing content, it can be learned that the existing protocol specifies that a value range of the number of antenna ports corresponding to each resource is (1, 2, 4). Obviously, the existing value range of the number of antenna ports does not include configurations such as 3 ports and 7 ports. Therefore, the embodiments of this application are essentially modifications to the existing protocol by adding 3 ports and/or 7 ports to the value range of the number of antenna ports corresponding to each resource specified in the existing protocol. It should be noted that 3 ports and 7 ports are merely examples and do not constitute a limitation on the newly added number of antenna ports in this solution.

Optionally, in this embodiment of this application, the network device may enable antenna ports of the terminal. That is, the network device independently determines the number of antenna ports that need to be enabled for the terminal. In this case, the number of antenna ports of the terminal in this embodiment of this application is the number of antenna ports enabled by the network device for the terminal.

In an implementation, the network device does not require the terminal to report the port capability, but directly sends enabling information to the terminal. For example, the terminal supports 8T, but the network device directly enables the antenna ports of the terminal to be 5T, without considering the port capability of the terminal. Correspondingly, in this solution, the number of antenna ports of the terminal is 5. In this case, the number of first antenna ports corresponding to each resource configured by the network device for the terminal is 5 ports.

In another implementation, after receiving the port capability reported by the terminal, the network device determines a value smaller than the port capability reported by the terminal as the number of antenna ports enabled by the network device for the terminal. For example, the port capability reported by the terminal supports 8T, but the network device determines, based on a plurality of factors, that enabled antenna ports of the terminal are 5T. Correspondingly, in this solution, the number of antenna ports of the terminal is 5. In this case, the number of first antenna ports corresponding to each resource configured by the network device for the terminal is 5 ports.

In an implementation, by adding the number of ports configured for resources in the existing protocol, the value range of the number of antenna ports corresponding to each resource is (1, 2, 4, M), where M is an integer greater than or equal to 3, and M is a variable. In embodiments of this application, when a value adapted to the port capability of the terminal cannot be found from the existing value range of the number of antenna ports, for example, (1, 2, 4), the network device may determine the value of M based on the port capability of the terminal, and use the value of M as the number of first antenna ports corresponding to the resource configured for the terminal.

In another implementation, adding the number of ports configured for resources in the existing protocol refers to expanding the value range of the number of antenna ports corresponding to each resource specified in the existing protocol, for example, expanding the value range of from (1, 2, 4) to (1, 2, 3, 4).

In embodiments of this application, when the number of antenna ports required by the port capability of the terminal conflicts with the existing protocol, the number of ports configured for resources is added to meet the uplink transmission requirements. This involves minor modifications to the existing protocol and can flexibly adapt to terminals with various antenna architectures. For example, for a terminal with a 3-antenna architecture, by newly adding a 3-port configuration to the number of ports configured for resources, each resource may be directly configured with 3 ports. For a terminal with a 5-antenna architecture, by newly adding a 5-port configuration to the number of ports configured for resources, each resource may be directly configured with 5 ports.

In embodiments of this application, optionally, the first resource configuration information indicates the at least one resource (Resource) through a Resource configuration, where the Resource configuration includes, for example, a ResourceID, a number of Resource ports, a comb and cyclic shift configuration, a time domain resource configuration, a frequency domain resource configuration, a precoding configuration, and the like. In this embodiment of this application, the number of Resource ports is defined as the number of first antenna ports. Optionally, the numbers of first antenna ports corresponding to a plurality of Resources are the same.

Optionally, the first resource configuration information indicates the at least one resource through two levels of configuration: a resource set (ResourceSet) and a resource (Resource). The network device may configure one or more ResourceSets for the terminal, and each ResourceSet may be configured with one or more Resources. The ResourceSet configuration includes, for example, a ResourceSetID, a Resource type, usage, power control related parameters, and the like. The Resource configuration includes, for example, a ResourceID, a number of Resource ports, a comb and cyclic shift configuration, a time domain resource configuration, a frequency domain resource configuration, a precoding configuration, and the like. In this embodiment of this application, the number of Resource ports is defined as the number of first antenna ports.

In embodiments of this application, the number of Resources configurable in each ResourceSet is related to the port capability supported by the terminal, and the numbers of first antenna ports corresponding to a plurality of Resources in one ResourceSet are the same.

Optionally, the Resource configurations of a plurality of Resources in one ResourceSet may be different, or partially the same.

Optionally, numbers of Resources included in different ResourceSets may be the same, or partially the same, or completely different.

Optionally, the ResourceSet configurations of different ResourceSets are different.

It should be noted that the first resource configuration information may be sent through downlink control signaling or higher layer signaling.

In S1003, the terminal performs resource configuration based on the first resource configuration information.

In an embodiment, a process in which the terminal performs resource configuration includes: respectively calculating cyclic shifts corresponding to the corresponding quantity of antenna ports indicated by the number of first antenna ports. The cyclic shift is used to generate a signal sequence to be sent.

For example, the at least one resource indicated by the first resource configuration information is an SRS resource, the number of antenna ports of the terminal is 3, and the number of first antenna ports corresponding to each SRS resource is 3 ports. With reference to the foregoing content, it can be learned that the antenna port identifiers may be represented as {1000, 1001, 1002}, and then the cyclic shifts corresponding to the antenna ports {1000, 1001, 1002} are respectively calculated. In this case, ${\overline{N}}_{ap}^{SRS} = 3$.

A calculation formula of the cyclic shiftαᵢ of an antenna portpᵢ is as follows: ${α}_{i} = 2 π \left(\frac{{n}_{SRS}^{cs , i}}{{n}_{SRS}^{cs , max}}+\frac{{f}_{csh} \left({n}_{f},{n}_{s , f ′}^{μ},l′\right)}{{Kn}_{SRS}^{cs , max}}\right)$ where: $\begin{matrix}{n}_{SRS}^{cs , i} \\ = \left\{\begin{matrix}\left({n}_{SRS}^{cs}+\frac{{n}_{SRS}^{cs , max} \left⌊\left(\overline{{p}_{ι}}-1000\right)/4\right⌋}{{\overline{N}}_{ap}^{SRS} / 4}\right) mod {n}_{SRS}^{cs , max} if {\overline{N}}_{ap}^{SRS} = 8 and {n}_{SRS}^{cs , max} = 6 \\ \begin{matrix}\left({n}_{SRS}^{cs}+\frac{{n}_{SRS}^{cs , max} \left⌊\left(\overline{{pP}_{ι}}-1000\right)/2\right⌋}{{\overline{N}}_{ap}^{SRS} / 2}\right) mod {n}_{SRS}^{cs , max} if {\overline{N}}_{ap}^{SRS} = 4 and {n}_{SRS}^{cs , max} = 6 ; \\ or if {\overline{N}}_{ap}^{SRS} = 8 and {n}_{SRS}^{cs , max} = 12\end{matrix} \\ \left({n}_{SRS}^{cs}+\frac{{n}_{SRS}^{cs , max} \left(\overline{{p}_{ι}}-1000\right)}{{\overline{N}}_{ap}^{SRS}}\right) mod {n}_{SRS}^{cs , max} otherwise\end{matrix}\right.\end{matrix}$

In another embodiment, the process in which the terminal performs resource configuration includes: calculating the frequency domain start position of each antenna port of each resource based on the corresponding quantity of antenna ports indicated by the number of first antenna ports corresponding to each resource and the number of antenna ports of the terminal.

For example, the corresponding quantity of antenna ports indicated by the number of first antenna ports is {1000, 1001, 1002}. For each resource, the frequency domain start positions corresponding to these three antenna ports of each resource are calculated.

A calculation formula of a frequency domain start position ${k}_{0}^{\left({p}_{i}\right)}$ of an antenna port pᵢ of a specific resource is as follows: ${k}_{0}^{\left({p}_{i}\right)} = {\overline{k}}_{0}^{\left({p}_{i}\right)} + {n}_{offset}^{FH} + {n}_{offset}^{RPFS}$ where: ${k}_{0}^{\left({p}_{i}\right)} = {n}_{shift} {N}_{sc}^{RB} + \left({k}_{TC}^{\left({p}_{i}\right)}+{k}_{offset}^{l ′}\right) + {f}_{coh} \left({n}_{f}{, n}_{s , f ′}^{μ},l′\right) mod {K}_{TC}$ $\begin{matrix}{k}_{TC}^{\left({p}_{i}\right)} \\ = \left\{\begin{matrix}\left({\overline{K}}_{TC}+3 {K}_{TC}/4\right) mod {K}_{TC} if {\overline{N}}_{ap}^{SRS} = 8 , \overline{{p}_{ι}} ∈ \left\{1003, 1007\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 8 , \overline{{p}_{ι}} ∈ \left\{1002, 1006\right\} , and {n}_{SRS}^{cs , max} = 6 \\ \left({\overline{K}}_{TC}+3 {K}_{TC}/4\right) mod {K}_{TC} if {\overline{N}}_{ap}^{SRS} = 8 , \overline{{p}_{ι}} ∈ \left\{1001, 1005\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 8 , \overline{{p}_{ι}} ∈ \left\{1001, 1003, 1005, 1007\right\} , and {n}_{SRS}^{cs , max} = 12 \\ \begin{matrix}\left({\overline{K}}_{TC}+3 {K}_{TC}/2\right) mod {K}_{TC} if {\overline{N}}_{ap}^{SRS} = 8 , \overline{{p}_{ι}} ∈ \left\{1001, 1003, 1005, 1007\right\} , \\ {n}_{SRS}^{cs , max} = 8 , and {n}_{SRS}^{cs} \geq {n}_{SRS}^{cs , max} / {2}^{{n}_{offset}^{FH}}\end{matrix} \\ \left({\overline{K}}_{TC}+3 {K}_{TC}/2\right) mod {K}_{TC} if {\overline{N}}_{ap}^{SRS} = 4 , \overline{{p}_{ι}} ∈ \left\{1001, 1003\right\} , and {n}_{SRS}^{cs , max} = 6 \\ \left({\overline{K}}_{TC}+3 {K}_{TC}/2\right) mod {K}_{TC} if {\overline{N}}_{ap}^{SRS} = 4 , \overline{{p}_{ι}} ∈ \left\{1001, 1003\right\} , {n}_{SRS}^{cs , max} ∈ \left\{8, 12\right\} , and {n}_{SRS}^{cs} \geq {n}_{SRS}^{cs , max} / 2 \\ {\overline{K}}_{TC} otherwise\end{matrix}\right.\end{matrix}$

With reference to the foregoing content, it can be learned that different formulas are used to calculate the frequency domain start positions for the odd-numbered antenna port groups or the even-numbered antenna port groups, respectively. Therefore, antenna ports {1000, 1002} are respectively allocated to a same frequency domain start position, and only the frequency domain start position of antenna port {1002} needs to be calculated to obtain the frequency domain start position of antenna port {1000}. For calculation of the frequency domain start position of antenna port {1002}, refer to the content corresponding to the above formula p̅ᵢ̅ ∈ {1002,1006}.

In addition, in an embodiment of this application, when calculating the frequency domain start position ${k}_{0}^{\left({p}_{i}\right)}$ of the antenna port {1001}, the involved parameter ${k}_{TC}^{\left({p}_{i}\right)}$ may be calculated by using the following formula: ${k}_{TC}^{\left({p}_{i}\right)} = \left\{\begin{matrix}\left({\overline{k}}_{TC}+\frac{{K}_{TC}}{2}\right) {modK}_{TC} , if {\overline{N}}_{ap}^{SRS} = 3 , {\overline{p}}_{i} ∈ \left\{1001\right\} , and {n}_{SRS}^{cs , max} = 6 \\ \begin{matrix}\left({\overline{k}}_{TC}+\frac{{K}_{TC}}{2}\right) {modK}_{TC} , if {\overline{N}}_{ap}^{SRS} = 3 , {\overline{p}}_{i} ∈ \left\{1001\right\} , and \\ {n}_{SRS}^{cs , max} ∈ \left\{8, 12\right\} , and {n}_{SRS}^{cs} \geq {n}_{SRS}^{cs , max} / 2\end{matrix}\end{matrix}\right.$

It should be noted that, to maintain consistency with the behavior of the terminal, correspondingly, the network device may also calculate the cyclic shifts and frequency domain start positions of the antenna ports based on the description in S403.

In this solution, the modification to existing resources is very minor, only one type of number of ports configured for resources is newly added, and the protocol modification is minor while enabling 3-port transmission. Corresponding adjustments are made to the calculation of cyclic shifts and frequency domain start positions of antenna ports.

The following describes the resource configuration method 400 provided in the embodiments of this application in detail in different scenarios.

Scenario #1: For an uplink 3T antenna port architecture, an example of using 1T+2T combined port transmission is as follows:
The terminal is configured by the network device with a plurality of SRS ResourceSets. Each SRS ResourceSet is configured with a plurality of ResourceGroups. Each ResourceGroup is configured with two Resources. One Resource corresponds to a number of second antenna ports of 1, and the other Resource corresponds to a number of second antenna ports of 2. The number of second antenna ports is configured in nrofSRS-Ports. A correspondence between ResourceGroup and Resource, and a correspondence between ResourceGroup and SRS ResourceSet may be included in the ResourceSet configuration or in the Resource configuration.

It should be noted that in the embodiments of this application, the 1T/2T/4T/3T in this solution are all logical antenna ports.

### Spatial domain information:

For SRS spatial relation information (SRS-SpatialRelationInfo), two Resources in each ResourceGroup are configured with the same servingCellID and referenceSignal, where the referenceSignal includes a synchronization signal block (SSB) index, a channel state information reference signal (CSI-RS) index, a sounding reference signal (SRS) resource identifier, and an uplink bandwidth part (BWP).

### Resource indication overhead and mapping:

The bit width of the resource indication field or the bit width of the resource set indication field is related to the number of ResourceGroups in a ResourceSet. For ease of description, the following uses the resource indication field SRI as an example. In this application, N_{SRS} for calculating the SRI of the number of bits is defined as the number of ResourceGroups in this solution.

When the network device enables the terminal to perform 3Tx transmission or the terminal reports supporting 3Tx transmission through capability reporting, the SRI is used to indicate the resources corresponding to PUSCH transmission, and the bit width of the SRI is related to the number of ResourceGroups in a ResourceSet.

An example of a bit field mapping relationship of the SRI is as follows, where a first index value of a bit field of the SRI is associated with a first ResourceGroup, and a second index value of the bit field of the SRI is associated with a second ResourceGroup, and so on:

| Bit field index value | ResourceGroupID |
|---|---|
| 0 | 0 |
| 1 | 1 |
| 2 | 2 |
| 3 | 3 |

Further, the antenna port used by the terminal when transmitting the SRS Resource in the ResourceGroup indicated by the SRI is used for PUSCH transmission.

### Power control parameters:

P̂_{PUSCH,b,f,c} (i, j, q_{d}, l) is calculated, where P̂_{PUSCH,b,f,c}(i, j, q_{d}, l) is a linear value of the PUSCH non-zero power P_{PUSCH,b,f,c}(i, j, q_{d}, l), b is an activated uplink BWP, f is a carrier, c is a serving cell, i is a transmission moment of PUSCH, j is a parameter set configuration index, q_{d} is a reference signal index, and 1 is a PUSCH power control adjustment state index.

When PUSCH-Config does not configure fullpowerMode1 or fullpowerMode2 or fullpower, and when the usage of SRS-ResourceSet is 'codebook', for PUSCH non-zero transmit power, the terminal performs linear scaling based on a ratio of a number of antenna ports for non-zero power PUSCH transmission within a ResourceGroup to a number of combined ports corresponding to the ResourceGroup, where the number of combined ports is a sum of the numbers of second antenna ports corresponding to all resources within the ResourceGroup.

The second resource set ResourceSet configures power control parameters for each of a plurality of first resource sets ResourceGroups included in the ResourceSet, and the power control parameters for resources within one ResourceGroup are the same. The power control parameters include a path loss compensation configuration parameter (alpha), a target reception power (p0), a path loss reference signal (pathlossReferenceRS), and an SRS power control adjustment state (SRS-powercontroladjustmentstates).

Further, the terminal performs PUSCH transmission based on the power control parameters used when transmitting SRS Resources in the ResourceGroup indicated by the SRI.

In this embodiment, by combining SRS Resources with different antenna ports, the objective of forming an equivalent new number of antenna ports is achieved. By adding a ResourceGroup level between SRS ResourceSet and Resource, this level may be included in the ResourceSet configuration or in the ResourceSet configuration, to perform grouping and resource configuration on Resources configured with different numbers of ports, thereby achieving an objective of combining ports.

Scenario #2: For an uplink 3T antenna port architecture, an example of using 1T+2T combined port transmission is as follows:
The terminal is configured by the network device with two SRS ResourceSets. ResourceSet1 has three Resources, which is each configured with one SRS port, and the three Resources belong to Group1, Group2, and Group3, respectively. ResourceSet2 also has three Resources, which is each configured with two SRS ports, and the three Resources belong to Group1, Group2, and Group3, respectively.

Three Resources within one Group are configured with same spatial domain information and power control parameters.

### Spatial domain information:

For SRS spatial relation information (SRS-SpatialRelationInfo), the Resource level within a Group is configured with the same servingCellID and reference Signal, where the referenceSignal includes a synchronization signal block index, a channel state information reference signal index, an SRS resource identifier, and an uplink bandwidth part (BWP). Resources within a Group use a same spatial domain filter.

### Resource indication overhead and mapping:

The bit width of the resource indication field or the bit width of the resource set indication field is related to a number of Groups. For ease of description, the following uses the resource indication field SRI as an example. In this application, N_{SRS} for calculating the SRI of the number of bits is defined as the number of Groups in this solution.

When the network device enables the terminal to perform 3Tx transmission or the terminal reports capability of supporting 3Tx transmission, the SRI is used to indicate the resources for PUSCH transmission, and the bit width of the SRI is related to the number of Groups.

An example of a bit field mapping relationship of the SRI is as follows, where a first index value of a bit field of the SRI is associated with a first Group, and a second index value of the bit field of the SRI is associated with a second Group, and so on:

| Bit field index value | GroupID |
|---|---|
| 0 | 0 |
| 1 | 1 |
| 2 | 2 |
| 3 | 3 |

Further, the antenna port used by the terminal when transmitting each Group indicated by the SRI is used for PUSCH transmission.

### Power control parameters:

P̂_{PUSCH,b,f,c}(i, j, q_{d}, l) is calculated, where P̂_{PUSCH,b,f,c}(i, j, q_{d}, l) is a linear value of the PUSCH non-zero power P_{PUSCH,b,f,c}(i, j, q_{d}, l), b is an activated uplink BWP, f is a carrier, c is a serving cell, i is a transmission moment of PUSCH, j is a parameter set configuration index, q_{d} is a reference signal index, and 1 is a PUSCH power control adjustment state index.

When PUSCH-Config does not configure fullpowerMode1 or fullpowerMode2 or fullpower, and when the usage of SRS-ResourceSet is 'codebook', for PUSCH non-zero transmit power, the terminal performs linear scaling based on a ratio of a number of antenna ports for non-zero power PUSCH transmission within a ResourceGroup to a number of combined ports corresponding to the ResourceGroup, where the number of combined ports is a sum of the numbers of second antenna ports corresponding to all resources within the ResourceGroup.

Same power control parameters are configured within the Group, that is, different power control parameter groups are configured for a plurality of Groups in one ResourceSet, and there is a correspondence with the configuration of another ResourceSet or other ResourceSets. The power control parameters include a path loss compensation configuration parameter (alpha), a target reception power (p0), a path loss reference signal (pathlossReferenceRS), and an SRS power control adjustment state (srs-powercontroladjustmentstates).

Further, the terminal performs PUSCH transmission based on the power control parameters used when transmitting SRS Resources in the Group indicated by the SRI.

In this embodiment, by combining SRS Resources in different SRS ResourceSets based on Group tags, the objective of forming an equivalent new number of antenna ports is achieved. A Group-level tag is added to each SRS Resource. Specified unified configurations need to be made under the same group tag, that is, different parameter configurations may exist for each Resource in the SRS ResourceSet.

Scenario #3: For an uplink 3T antenna port architecture, an example of using 1T+2T combined port transmission is as follows:
The terminal is configured by the network device with a plurality of SRS ResourceSets. Each SRS ResourceSet is configured with 2 Resources. One Resource is configured with 1 SRS port, and the other Resource is configured with 2 SRS ports. The number of ports is configured in nrofSRS-Ports.

### Spatial domain information:

For SRS spatial relation information (SRS-SpatialRelationInfo), two Resources in each ResourceGroup are configured with the same servingCellID and referenceSignal, where the referenceSignal includes a synchronization signal block (SSB) index, a channel state information reference signal (CSI-RS) index, a sounding reference signal (SRS) resource identifier, and an uplink bandwidth part (BWP).

### Resource indication overhead and mapping:

The bit width of the resource indication field or the bit width of the resource set indication field is related to a number of Resources. For ease of description, the following uses the SRS resource set indication SRSI field as an example.

When the network device enables the terminal to perform 3Tx transmission or the terminal reports capability of supporting 3Tx transmission, the SRSI is used to indicate the resources for PUSCH transmission, and the bit width of the SRSI is related to a number ResourceSets. In this case, the function of using the SRI to indicate the resource for PUSCH transmission does not need to be configured.

An example of a bit field mapping relationship of the SRSI is as follows, where a first index value of a bit field of the SRSI is associated with a first ResourceSet, and a second index value of the bit field of the SRSI is associated with a second ResourceSet, and so on:

| Bit field index value | ResourceSetID |
|---|---|
| 0 | 0 |
| 1 | 1 |
| 2 | 2 |
| 3 | 3 |

Further, the antenna port used by the terminal when transmitting the SRS Resource in the ResourceSet indicated by the SRSI is used for PUSCH transmission.

### Power control parameters:

P̂_{PUSCH,b,f,c}(i, j, q_{d}, l) is calculated, where P̂_{PUSCH,b,f,c}(i, j, q_{d}, l) is a linear value of the PUSCH non-zero power P_{PUSCH,b,f,c}(i, j, q_{d}, l), b is an activated uplink BWP, f is a carrier, c is a serving cell, i is a transmission moment of PUSCH, j is a parameter set configuration index, q_{d} is a reference signal index, and 1 is a PUSCH power control adjustment state index.

When PUSCH-Config does not configure fullpowerMode1 or fullpowerMode2 or fullpower, and when the usage of SRS-ResourceSet is 'codebook', for PUSCH non-zero transmit power, the terminal performs linear scaling based on a ratio of a number of antenna ports for non-zero power PUSCH transmission within a ResourceGroup to a number of combined ports corresponding to the ResourceGroup, where the number of combined ports is a sum of the numbers of second antenna ports corresponding to all resources within the ResourceGroup.

Each ResourceSet configures same power control parameters for each Resource included in the ResourceSet, and the power control parameters include a path loss compensation configuration parameter (alpha), a target reception power (p0), a path loss reference signal (pathlossReferenceRS), and an SRS power control adjustment state (srs-powercontroladjustmentstates).

Further, the terminal performs PUSCH transmission based on the power control parameters used when transmitting the SRS Resource in the ResourceSet indicated by the SRSI.

In this embodiment, by combining different SRS Resources in a same SRS ResourceSet, the objective of forming an equivalent new number of antenna ports is achieved. One SRS ResourceSet corresponds to one combined antenna port, and Resources in each ResourceSet are separately configured with different antenna ports, and specified unified configuration is made to other parameters. In this case, the SRSI, instead of the SRI, needs to be used for resource indication.

It may be understood that, to implement functions in the foregoing embodiments, the network device and the terminal include corresponding hardware structures and/or software modules for performing various functions. A person skilled in the art should be easily aware that, in this application, the units and method steps in the examples described with reference to embodiments disclosed in this application may be implemented by hardware or a combination of hardware and computer software. Whether a specific function is performed by hardware or hardware driven by computer software depends on a particular application scenario and a design constraint condition of the technical solutions.

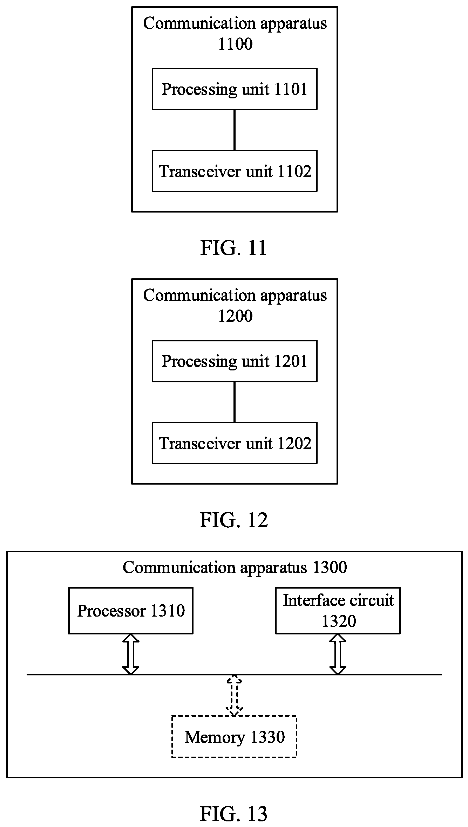

FIG. 11 to FIG. 14 are schematic structural diagrams of possible communication apparatuses according to an embodiment of this application. These communication apparatuses may be configured to implement the functions of the terminal or the network device in the foregoing method embodiments, and therefore can also implement the beneficial effects of the foregoing method embodiments. In the embodiments of this application, the communication apparatus may be the terminal 102 or the terminal 103 shown in FIG. 1, or the network device 101 shown in FIG. 1, or a module (for example, a chip) used in the terminal or the network device.

As shown in FIG. 11, the communication apparatus 1100 includes a processing unit 1101 and a transceiver unit 1102. The communication apparatus 1100 is configured to implement the functions of the terminal or the network device in the foregoing method embodiment shown in FIG. 2.

When the communication apparatus 1100 is configured to implement the functions of the network device in the method embodiment shown in FIG. 2, the transceiver unit 1102 is configured to send first resource configuration information, where the first resource configuration information indicates at least one resource and a number of first antenna ports corresponding to the resource, the number of first antenna ports is greater than a number of antenna ports of the terminal, the number of first antenna ports indicates a corresponding quantity of antenna port identifiers, and the number of first antenna ports is determined based on port capability reported by the terminal. The transceiver unit 1102 is further configured to send first indication information or receive second indication information reported by the terminal, where each of the first indication information and the second indication information carries a first antenna port identifier and/or a second antenna port identifier, the first antenna port identifier is an identifier of a deactivated antenna port, the second antenna port identifier is an identifier of an activated antenna port, a quantity of first antenna port identifiers is a difference between the number of first antenna ports and the number of antenna ports of the terminal, and a quantity of second antenna port identifiers is the same as the number of antenna ports of the terminal. The processing unit 1101 is configured to perform resource configuration based on the first resource configuration information and the first indication information or the second indication information.

When the communication apparatus 1100 is used to implement the functions of the terminal in the method embodiment shown in FIG. 2, the transceiver unit 1102 is configured to receive first resource configuration information, where the first resource configuration information indicates at least one resource, a number of first antenna ports corresponding to the resource, the number of first antenna ports is greater than a number of antenna ports of the terminal, the number of first antenna ports indicates a corresponding quantity of antenna port identifiers, and the number of first antenna ports is determined based on port capability of the terminal. The transceiver unit 1102 is further configured to receive first indication information or report second indication information to network device, where each of the first indication information and the second indication information carries a first antenna port identifier and/or a second antenna port identifier, the first antenna port identifier is an identifier of a deactivated antenna port, the second antenna port identifier is an identifier of an activated antenna port, a quantity of first antenna port identifiers is a difference between the number of first antenna ports and the number of antenna ports of the terminal, and a quantity of second antenna port identifiers is the same as the number of antenna ports of the terminal. The processing unit 1101 is configured to perform resource configuration based on the first resource configuration information and the first indication information or the second indication information.

For more detailed descriptions of the processing unit 1101 and the transceiver unit 1102, directly refer to the related descriptions in the method embodiment shown in FIG. 2. Details are not described herein again.

As shown in FIG. 12, the communication apparatus 1200 includes a processing unit 1201 and a transceiver unit 1202. The communication apparatus 1200 is configured to implement the functions of the terminal or the network device in the method embodiment shown in FIG. 4.

When the communication apparatus 1200 is configured to implement the functions of the network device in the method embodiment shown in FIG. 4, the transceiver unit 1202 is configured to generate second resource configuration information, where the second resource configuration information indicates a plurality of first resource sets and numbers of second antenna ports corresponding to resources in each first resource set, a sum of the numbers of second antenna ports corresponding to the resources in the first resource set is the same as a number of antenna ports of the terminal, and spatial domain information and power control parameters of the resources in the first resource set are the same; and send the second resource configuration information to the terminal. The processing unit 12 is configured to perform resource configuration based on the second resource configuration information.

When the communication apparatus 1200 is configured to implement the functions of the terminal in the method embodiment shown in FIG. 4, the transceiver unit 1202 is configured to receive second resource configuration information, where the second resource configuration information indicates a plurality of first resource sets and numbers of second antenna ports corresponding to resources in each first resource set, a sum of the numbers of second antenna ports corresponding to the resources in the first resource set is the same as a number of antenna ports of the terminal, and spatial domain information and power control parameters of the resources in the first resource set are the same. The processing unit 12 is configured to perform resource configuration based on the second resource configuration information.

For more detailed descriptions of the processing unit 1201 and the transceiver unit 1202, directly refer to the related descriptions in the method embodiment shown in FIG. 4. Details are not described herein again.

As shown in FIG. 13, the communication apparatus 1300 includes a processor 1310 and an interface circuit 1320. The processor 1310 and the interface circuit 1320 are coupled to each other. It may be understood that, the interface circuit 1320 may be a transceiver or an input/output interface. The interface circuit 1320 is configured to receive a signal from a communication apparatus other than the communication apparatus and transmit the signal to the processor 1310, or send a signal from the processor 1310 to a communication apparatus other than the communication apparatus.

Optionally, the communication apparatus 1300 may further include a memory 1330, configured to store instructions to be executed by the processor 1310, store input data required by the processor 1310 to execute instructions, or store data generated after the processor 1310 executes instructions.

When the communication apparatus 1300 is configured to implement the method shown in FIG. 2, the processor 1310 is configured to implement the functions of the processing unit 1101, and the interface circuit 1320 is configured to implement the functions of the transceiver unit 1102.

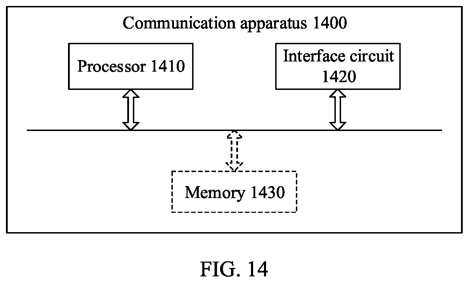

As shown in FIG. 14, the communication apparatus 1400 includes a processor 1410 and an interface circuit 1420. The processor 1410 and the interface circuit 1420 are coupled to each other. It may be understood that, the interface circuit 1420 may be a transceiver or an input/output interface. The interface circuit 1420 is configured to receive a signal from a communication apparatus other than the communication apparatus and transmit the signal to the processor 1410, or send a signal from the processor 1410 to a communication apparatus other than the communication apparatus.

Optionally, the communication apparatus 1400 may further include a memory 1430, configured to store instructions to be executed by the processor 1410, store input data required by the processor 1410 to execute instructions, or store data generated after the processor 1410 executes instructions.

When the communication apparatus 1400 is configured to implement the method shown in FIG. 4, the processor 1410 is configured to implement the functions of the processing unit 1201, and the interface circuit 1420 is configured to implement the functions of the transceiver unit 1202.

When the communication apparatus is a chip used in the terminal, the terminal chip implements the functions of the terminal in the foregoing method embodiment. The terminal chip receives information from another module (such as a radio frequency module or an antenna) in the terminal, where the information is sent by the network device to the terminal. Alternatively, the terminal chip sends information to another module (such as a radio frequency module or an antenna) in the terminal, where the information is sent by the terminal to the network device.

When the communication apparatus is a chip used in the network device, the network device chip implements the functions of the network device in the foregoing method embodiment. The network device chip receives information from another module (such as a radio frequency module or an antenna) in the network device, where the information is sent by the terminal to the network device. Alternatively, the network device chip sends information to another module (such as a radio frequency module or an antenna) in the network device, where the information is sent by the network device to the terminal.

This application further provides a computer-readable storage medium. The computer-readable storage medium stores a computer program. The computer program includes program instructions. When the program instructions are executed, the method shown in FIG. 2 or FIG. 4 is implemented.

This application further provides a computer program product. The computer program product includes computer program code, and when the computer program code is run on a computer, the computer is enabled to perform the method shown in FIG. 2 or FIG. 4.

It may be understood that, the processor in this embodiment of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

Methods steps in the embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. An example storage medium is coupled to a processor, to enable the processor to read information from and write information to the storage medium. Certainly, the storage medium may alternatively be an integral part of the processor. The processor and the storage medium may be located in the ASIC. In addition, the ASIC may be located in a network device or a terminal. Certainly, the processor and the storage medium may also exist as discrete components in the network device or the terminal.

All or some of the foregoing embodiments may be implemented by using software, hardware, firmware, or any combination thereof. When the software is used for implementation, some or all of the embodiments may be implemented in a form of a computer program product. The computer program product includes one or more computer programs or instructions. When the computer program or the instructions are loaded and executed on a computer, procedures or functions in embodiments of this application are all or partially executed. The computer may be a general-purpose computer, a dedicated computer, a computer network, or another programmable apparatus. The computer program or instructions may be stored in a computer-readable storage medium, or transmitted through the computer-readable storage medium. The computer-readable storage medium may be any usable medium accessible by a computer, or a data storage device, such as a server, integrating one or more usable media. The usable medium may be a magnetic medium, for example, a floppy disk, a hard disk, or a magnetic tape; an optical medium, for example, a DVD; or a semiconductor medium, for example, a solid state disk (solid state disk, SSD), or the like.

In the embodiments of this application, if no special description or logic conflict exists, terms and/or descriptions of different embodiments are consistent and can be mutually referenced, and technical features of different embodiments may be combined based on an internal logical relationship between the different embodiments to form a new embodiment.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects.

It may be understood that various numeric numbers used in the embodiments of this application are merely for differentiation for ease of description, and are not intended to limit the scope of the embodiments of this application. Sequence numbers of the foregoing processes do not indicate execution sequences, and the execution sequences of the processes should be determined based on functions and internal logic of the processes.

## Claims

1. A resource configuration method, applied to a network device, wherein the method comprises:
sending first resource configuration information, wherein the first resource configuration information indicates at least one resource and a number of first antenna ports corresponding to the resource, the number of first antenna ports is greater than a number of antenna ports of a terminal, the number of first antenna ports indicates a corresponding quantity of antenna port identifiers, and the number of first antenna ports is determined based on port capability of the terminal; and
sending first indication information or receiving second indication information reported by the terminal, wherein each of the first indication information and the second indication information carries a first antenna port identifier and/or a second antenna port identifier, the first antenna port identifier is an identifier of a deactivated antenna port, the second antenna port identifier is an identifier of an activated antenna port, a quantity of first antenna port identifiers is a difference between the number of first antenna ports and the number of antenna ports of the terminal, and a quantity of second antenna port identifiers is the same as the number of antenna ports of the terminal.

2. The method according to claim 1, wherein after the receiving second indication information reported by the terminal, the method further comprises:
sending third indication information to the terminal, wherein the third indication information indicates that the network device has obtained the first antenna port identifier and/or the second antenna port identifier carried in the second indication information.

3. The method according to claim 1 or 2, wherein the first indication information is carried in downlink control signaling.

4. The method according to any one of claims 1-3, wherein the second indication information is carried in uplink control signaling.

5. The method according to any one of claims 1-4, wherein the number of antenna ports of the terminal is 3, and the number of first antenna ports is 4.

6. The method according to any one of claims 1-4, wherein the at least one resource is a sounding reference signal SRS resource.

7. The method according to any one of claims 1-4, wherein the method further comprises:
calculating, based on first N antenna port identifiers in a corresponding quantity of antenna port identifiers indicated by the number of first antenna ports and arranged in order of size, cyclic shifts respectively corresponding to the first N antenna port identifiers, wherein the cyclic shifts are used to generate a signal sequence to be sent, and N is the number of antenna ports of the terminal.

8. The method according to any one of claims 1-4, wherein the method further comprises:
calculating a frequency domain start position of each antenna port of each resource based on an identifier of an activated antenna port of each resource and the number of antenna ports of the terminal.

9. A resource configuration method, applied to a terminal, wherein the method comprises:
receiving first resource configuration information, wherein the first resource configuration information indicates at least one resource and a number of first antenna ports corresponding to the resource, the number of first antenna ports is greater than a number of antenna ports of the terminal, the number of first antenna ports indicates a corresponding quantity of antenna port identifiers, and the number of first antenna ports is determined based on port capability of the terminal;
receiving first indication information or reporting second indication information to a network device, wherein each of the first indication information and the second indication information carries a first antenna port identifier and/or a second antenna port identifier, the first antenna port identifier is an identifier of a deactivated antenna port, the second antenna port identifier is an identifier of an activated antenna port, a quantity of first antenna port identifiers is a difference between the number of first antenna ports and the number of antenna ports of the terminal, and a quantity of second antenna port identifiers is the same as the number of antenna ports of the terminal; and
performing resource configuration based on the first resource configuration information and the first indication information or the second indication information.

10. The method according to claim 9, wherein after the reporting second indication information to a network device, the method further comprises:
receiving third indication information sent by the network device, wherein the third indication information indicates that the network device has obtained the first antenna port identifier and/or the second antenna port identifier carried in the second indication information.

11. The method according to claim 9 or 10, wherein the first indication information is carried in downlink control signaling.

12. The method according to any one of claims 9-11, wherein the second indication information is carried in uplink control signaling.

13. The method according to any one of claims 9-11, wherein the number of antenna ports of the terminal is 3, and the number of first antenna ports is 4.

14. The method according to any one of claims 9-11, wherein the at least one resource is a sounding reference signal SRS resource.

15. The method according to any one of claims 9-11, wherein the method further comprises:
calculating, based on first N antenna port identifiers in a corresponding quantity of antenna port identifiers indicated by the number of first antenna ports and arranged in order of size, cyclic shifts respectively corresponding to the first N antenna port identifiers, wherein the cyclic shifts are used to generate a signal sequence to be sent, and N is the number of antenna ports of the terminal.

16. The method according to any one of claims 9-11, wherein the method further comprises:
calculating a frequency domain start position of each antenna port of each resource based on an identifier of an activated antenna port of each resource and the number of antenna ports of the terminal.

17. The method according to any one of claims 9-11, wherein the method further comprises:
in PUSCH transmission, linearly scaling PUSCH non-zero power based on a number of activated antenna ports indicated by the second antenna port identifier.

18. A resource configuration method, applied to a network device, wherein the method comprises:
generating second resource configuration information, wherein the second resource configuration information indicates a plurality of first resource sets and numbers of second antenna ports corresponding to resources in each first resource set, a sum of the numbers of second antenna ports corresponding to resources in the first resource set is the same as the number of antenna ports of the terminal, and spatial domain information and power control parameters of resources in the first resource set are the same; and
sending the second resource configuration information to the terminal.

19. The method according to claim 18, wherein the second resource configuration information comprises a first resource set identifier corresponding to each resource in the first resource set.

20. The method according to claim 19, wherein the second resource configuration information further comprises a second resource set identifier corresponding to each resource in the first resource set, and the second resource set identifier is an identifier of a second resource set to which the first resource set belongs.

21. The method according to claim 20, wherein in the plurality of first resource sets, second resource set identifiers corresponding to resources in some of the first resource sets are the same, and second resource set identifiers corresponding to resources in some of the first resource sets are different.

22. The method according to claim 20 or 21, wherein second resource set identifiers corresponding to resources in a same first resource set are not completely the same.

23. The method according to claim 22, wherein the numbers of second antenna ports corresponding to resources in a same second resource set are the same.

24. The method according to claim 22 or 23, wherein the numbers of second antenna ports corresponding to resources in different second resource sets are not completely the same.

25. The method according to any one of claims 20-24, wherein spatial domain information and power control parameters of resources in a plurality of first resource sets belonging to a same second resource set are partially the same or different.

26. The method according to any one of claims 18-25, wherein the numbers of second antenna ports corresponding to resources in each first resource set are all the same, or partially the same, or all different.

27. The method according to any one of claims 18-26, wherein the spatial domain information comprises a serving cell identifier and an identifier of a reference signal, and the reference signal comprises a synchronization signal block (SSB) index, a channel state information reference signal (CSI-RS) index, a sounding reference signal (SRS) resource identifier, and an uplink bandwidth part (BWP).

28. The method according to any one of claims 18-26, wherein the power control parameters comprise a path loss compensation configuration parameter (alpha), a target reception power (p0), a path loss reference signal (pathlossReferenceRS), and an SRS power control adjustment state (SRS-powercontroladjustmentstates).

29. The method according to any one of claims 18-26, wherein the method further comprises:
in a downlink scheduling process, sending downlink control information to the terminal, wherein the downlink control information carries a resource indication field or a resource set indication field, a bit width of the resource indication field or a bit width of the resource set indication field corresponds to a number of the first resource sets, and a target first resource set indicated by the resource indication field or the resource set indication field is used to configure PUSCH transmission.

30. A resource configuration method, applied to a terminal, wherein the method comprises:
receiving second resource configuration information, wherein the second resource configuration information indicates a plurality of first resource sets and a number of second antenna ports corresponding to resources in each first resource set, a sum of the numbers of second antenna ports corresponding to resources in the first resource set is the same as a number of antenna ports of the terminal, and spatial domain information and power control parameters of resources in the first resource set are the same; and
performing resource configuration based on the second resource configuration information.

31. The method according to claim 30, wherein the second resource configuration information comprises a first resource set identifier corresponding to each resource in the first resource set.

32. The method according to claim 31, wherein the second resource configuration information further comprises a second resource set identifier corresponding to each resource in the first resource set, and the second resource set identifier is an identifier of a second resource set to which the first resource set belongs.

33. The method according to claim 32, wherein in the plurality of first resource sets, second resource set identifiers corresponding to resources in some of the first resource sets are the same, and second resource set identifiers corresponding to resources in some of the first resource sets are different.

34. The method according to claim 32 or 33, wherein second resource set identifiers corresponding to resources in a same first resource set are not completely the same.

35. The method according to claim 34, wherein the numbers of second antenna ports corresponding to resources in a same second resource set are the same.

36. The method according to claim 34 or 35, wherein the numbers of second antenna ports corresponding to resources in different second resource sets are not completely the same.

37. The method according to any one of claims 32-36, wherein spatial domain information and power control parameters of each resource in a plurality of first resource sets belonging to a same second resource set are partially the same or different.

38. The method according to any one of claims 30-37, wherein the numbers of second antenna ports corresponding to each resource in each first resource set are all the same, or partially the same, or all different.

39. The method according to any one of claims 30-38, wherein the spatial domain information comprises a serving cell identifier and an identifier of a reference signal, and the reference signal comprises a synchronization signal block (SSB) index, a channel state information reference signal (CSI-RS) index, a sounding reference signal (SRS) resource identifier, and an uplink bandwidth part (BWP).

40. The method according to any one of claims 30-38, wherein the power control parameters comprise a path loss compensation configuration parameter (alpha), a target reception power (p0), a path loss reference signal (pathlossReferenceRS), and an SRS power control adjustment state (SRS-powercontroladjustmentstates).

41. The method according to any one of claims 30-38, wherein the method further comprises:
in a downlink scheduling process, sending downlink control information to the terminal, wherein the downlink control information carries a resource indication field or a resource set indication field, and a bit width of the resource indication field or a bit width of the resource set indication field corresponds to a number of the first resource sets; and
configuring PUSCH transmission based on a target first resource set indicated by the resource indication field or the resource set indication field.

42. The method according to claim 41, wherein the method further comprises:
in PUSCH transmission, linearly scaling PUSCH non-zero power based on a ratio of the number of antenna ports used for PUSCH transmission to a number of combined ports corresponding to the target first resource set.

43. A communication apparatus, comprising a module configured to perform the method according to any one of claims 1 to 8, or a module configured to perform the method according to any one of claims 18 to 29.

44. A communication apparatus, comprising a module configured to perform the method according to any one of claims 9 to 17, or a module configured to perform the method according to any one of claims 30 to 42.

45. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to, by using a logic circuit or by executing code instructions, implement the method according to any one of claims 1 to 8, or implement the method according to any one of claims 18 to 29.

46. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to, by using a logic circuit or by executing code instructions, implement the method according to any one of claims 9 to 17, or implement the method according to any one of claims 30 to 42.

47. A computer-readable storage medium, wherein the storage medium stores a computer program or instructions, and when the computer program or instructions are executed by a communication apparatus, the method according to any one of claims 1 to 8 is implemented, or the method according to any one of claims 18 to 29 is implemented.

48. A computer-readable storage medium, wherein the storage medium stores a computer program or instructions, and when the computer program or instructions are executed by a communication apparatus, the method according to any one of claims 9 to 17 is implemented, or the method according to any one of claims 30 to 42 is implemented.
